# EUROPEAN PATENT SPECIFICATION

(11) **EP 2 330 498 B1**
(45) Date of publication and mention of the grant of the patent: **05.07.2017**
(21) Application number: 09814248.2
(22) Date of filing: 10.09.2009
(51) Int. Cl.: G06F 3/0485, G06F 3/0488, G06F 17/30

(54) **DATA DISPLAY DEVICE, DATA DISPLAY METHOD, DATA DISPLAY PROGRAM, AND RECORDING MEDIUM**
DATENANZEIGEVORRICHTUNG, DATENANZEIGEVERFAHREN, DATENANZEIGEPROGRAMM UND AUFZEICHNUNGSMEDIUM
DISPOSITIF D'AFFICHAGE DE DONNÉES, PROCÉDÉ D'AFFICHAGE DE DONNÉES, PROGRAMME D'AFFICHAGE DE DONNÉES, ET SUPPORT D'ENREGISTREMENT

(30) Priority: 16.09.2008 JP 2008236071
(43) Date of publication of application: 08.06.2011
(73) Proprietor: Panasonic Intellectual Property Corporation of America, Torrance, CA 90503 (US)
(72) Inventor: KAWANISHI, Ryouichi, Osaka-shi, Osaka 540-6207 (JP); ICHO, Keiji, Osaka-shi, Osaka 540-6207 (JP)
(74) Representative: Grünecker Patent- und Rechtsanwälte PartG mbB
(86) International application number: PCT/JP2009/004478
(87) International publication number: WO 2010/032402

(56) References cited:
- JP-A- 7 121 567
- JP-A- 2005 010 854
- JP-A- 2006 311 573
- JP-A- 2008 175 994
- US-A- 5 548 699
- US-A1- 2001 030 662
- US-A1- 2005 283 741
- US-A1- 2008 155 461

## Description

### [Technical Field]

The present invention relates to technology for controlling display of a large amount of file data.

### [Background Art]

In recent years, digital still cameras (DSC), cellular telephone cameras, etc. that can take photographs with a semiconductor imaging device, such as a charge coupled device (CCD) or the like, have become common, making casual photography possible. In recording media that are either internal to such devices or removable and that are for storing image data, the capacity for storage has grown so large that even an individual user can save between thousands and tens of thousands of pieces of image data on a single recording medium.

On the other hand, when a large amount of image data is saved on a recording medium, a user has to spend a significant amount of time and effort to find a desired image or to achieve an overall understanding of what the large amount of image data contains.

One conventional method to help the user find a desired image from within a large amount of image data or achieve an overall understanding of what the large amount of image data contains is, for example, for the user to specify a starting and ending point of an AV range within the large amount of data and to display many thumbnail images (reduced images) in that AV range (see, for example, Patent Literature 1).

Another conventional method divides image data into groups, displays multiple groups at the same time, and scrolls through image data separately for each of the groups (see, for example, Patent Literature 2).

US 5 548 699 A **relates to images displaying. In particular, a plurality of image elements is arranged at predetermined positions dependent on a user input.**

### [Citation List]

### [Patent Literature]

[Patent Literature 1]
   Japanese Patent Application Publication No. 2006-18749
[Patent Literature 2]
   Japanese Patent Application Publication No. 2006-268010

### [Summary of Invention]

### [Technical Problem]

In the first of the above-mentioned conventional methods, since it is hard to begin with for the user to achieve an overall understanding of what kind of images are contained in the large amount of image data, an appropriate specification of an AV range is itself difficult. Also, since the display of each image in the AV range is unique, this method cannot always allow the user to view images within the AV range or search for a particular image efficiently.

In the other conventional method mentioned above, although each group is scrolled through individually, each image within a group is displayed uniquely, and thus all of the images in a group are shown in the same way. As a result, this method of display cannot always allow the user to view images within the AV range or search for a particular image efficiently.

It is an object of the present invention to provide a data display device, data display method, data display program and recording medium that allow the user to view and search file data, such as image data, efficiently.

### [Solution to Problem]

**This is achieved by the features of the independent claims.**

In order to fulfill the above-described object, a data display device according to the present invention is for displaying, on a display unit, a group of images related to a plurality of pieces of file data and comprises: an operation unit operable to receive, from a user, a display operation pertaining to the group of images related to the pieces of file data; a storage unit storing cluster information on clusters that are generated by grouping the pieces of file data according to a grouping condition; and a control unit operable to display, on the display unit, the group of images related to the pieces of file data so that the user can distinguish between clusters, in accordance with the display operation received by the operation unit and with the cluster information stored in the storage unit.

An integrated circuit according to the present invention is for displaying, on a display unit, a group of images related to a plurality of pieces of file data and comprises: a receiving unit operable to receive, from an operation unit, a display operation by a user pertaining to the group of images related to the pieces of file data; and a control unit operable to display, on the display unit, the group of images related to the pieces of file data so that a user can distinguish between clusters, in accordance with the display operation received by the receiving unit and with cluster information stored in a storage unit storing cluster information on clusters that are generated by grouping the pieces of file data according to a grouping condition.

Also, a data display method according to the present invention is used in a data display device that displays, on a display unit, a group of images related to a plurality of pieces of file data and that comprises a storage unit storing cluster information on clusters that are generated by grouping the pieces of file data according to a grouping condition, and the data display method comprises: receiving, from a user, a display operation pertaining to the group of images related to the pieces of file data; and displaying, on the display unit, the group of images related to the pieces of file data so that the user can distinguish between clusters, in accordance with the received display operation and with the cluster information stored in the storage unit.

Furthermore, a data display program according to the present invention is for a data display device that displays, on a display unit, a group of images related to a plurality of pieces of file data and that comprises a storage unit storing cluster information on clusters that are generated by grouping the pieces of file data according to a grouping condition, and the data display program causes the data display device to perform: receiving, from a user, a display operation pertaining to the group of images related to the pieces of file data; and displaying, on the display unit, the group of images related to the pieces of file data so that the user can distinguish between clusters, in accordance with the received display operation and with the cluster information stored in the storage unit.

Furthermore, a recording medium according to the present invention has recorded thereon a data display program for a data display device that displays, on a display unit, a group of images related to a plurality of pieces of file data and that comprises a storage unit storing cluster information on clusters that are generated by grouping the pieces of file data according to a grouping condition, the data display program causing the data display device to perform: receiving, from a user, a display operation pertaining to the group of images related to the pieces of file data; and displaying, on the display unit, the group of images related to the pieces of file data so that the user can distinguish between clusters, in accordance with the received display operation and with the cluster information stored in the storage unit.

### [Advantageous Effects of Invention]

With each of the above-described data display device, integrated circuit, data display method, data display program and recording medium, the user can view and search file data while recognizing groups of file data in accordance with a grouping condition. The user can thereby easily and efficiently view file data or search for a desired piece of file data.

In the data display device, the control unit may display by scrolling, on the display unit, the group of images related to the pieces of file data while controlling a scrolling speed for each cluster.

With this structure, the user can easily achieve an understanding, via changes in scrolling speed, of a grouping of file data being displayed and of a change from one grouping to another.

In the data display device, the control unit may calculate the scrolling speed for each cluster in accordance with a number of pieces of file data in the cluster and display by scrolling the group of images in accordance with the scrolling speed calculated for each cluster.

With this structure, the user can also simultaneously achieve an understanding of changes in the number of pieces of file data in a cluster.

In the data display device, the control unit may adopt a variable scrolling speed within a cluster and display by scrolling the group of images.

With this structure, the user can more easily achieve an overall understanding of file data in a cluster.

In the data display device, the control unit may display by scrolling the group of images so that a scrolling speed during at least one of a beginning and an end of a cluster display period is slower than a scrolling speed during a middle of the cluster display period.

With this structure, the user can more easily achieve an overall understanding of file data in a cluster during at least one of a beginning and an end of a cluster display period.

In the data display device, the control unit may display images related to pieces of file data in each cluster while controlling a layout position on the display unit of the images in the cluster.

With this structure, the user can easily achieve an understanding, via changes in the layout of images, of a grouping of file data being displayed and of a change from one grouping to another.

In the data display device, the control unit may display images related to pieces of file data so that (i) each image related to a piece of file data in a cluster at least partially overlaps with another image in the cluster and (ii) images related to pieces of file data in different clusters do not overlap.

This structure provides a mode in which the user can easily understand, based on the layout of images, a grouping of file data and of a change from one grouping to another.

In the data display device, the control unit may set a display frame color or a display background color to a same color for all images related to pieces of file data in a same cluster and set display frame colors or display background colors for adjacently displayed clusters to different colors.

With this structure, the user can easily achieve an understanding, via changes in display frame color or display background color, of a grouping of file data being displayed and of a change from one grouping to another.

In the data display device, the storage unit may store cluster information on clusters that are generated by grouping the pieces of file data according to each of a plurality of grouping conditions, the display unit may display a plurality of groups of images related to the pieces of file data, the operation unit may further receive, from the user, a condition selection operation for each group, and in accordance with cluster information, stored in the storage unit, for grouping conditions corresponding to the condition selection operations, the control unit may display the group of images so that the user can distinguish between clusters generated according to the grouping conditions.

With this structure, the user can view and search file data by cluster in accordance with a desired grouping condition.

In the data display device, the operation unit may receive display operations simultaneously for two or more groups, and the control unit may simultaneously display images in the two or more groups for which the display operations were received simultaneously.

With this structure, the user can view and search file data under, for example, two or more grouping conditions for the same file data group.

In the data display device, the storage unit may store cluster information on layered clusters that are generated by grouping the pieces of file data hierarchically according to the grouping conditions, and the control unit may display the group of images so that the user can distinguish between layered clusters in accordance with the display operation and with the cluster information stored in the storage unit.

With this structure, the user can view and search file data by cluster at a desired layer level.

In the data display device, the control unit may display, on the display unit, attribute information for a cluster that includes a piece of file data being displayed.

With this structure, the user can view and search file data while comprehending attribute information for a cluster. Therefore, the user can more easily and efficiently view the file data or search for a desired piece of file data.

In the data display device, the control unit may display, on the display unit, a location within all of the pieces of file data for the cluster that includes a piece of file data being displayed.

With this structure, the user can view and search file data while understanding the position of a cluster within all of the pieces of file data. Therefore, the user can more easily and efficiently view the file data or search for a desired piece of file data.

In the data display device, the control unit may display, on the display unit, statistical information on the pieces of file data.

With this structure, the user can view and search file data while comprehending statistical information on the pieces of file data. Therefore, the user can more easily and efficiently view the file data or search for a desired piece of file data.

In the data display device, the control unit may display, on the display unit, an image for a representative piece of file data, emphasizing the image.

With this structure, since an image related to a piece of file data that fulfills a predetermined condition is emphasized when displayed, the user can more easily and efficiently view the file data or search for a desired piece of file data.

### [Brief Description of Drawings]

Fig. 1 is a hardware block diagram of a data display device according to embodiment 1.
Fig. 2 is a functional block diagram of the data display device in Fig. 1.
Fig. 3(a) and (b) shows examples of screens displayed by the display unit in Fig. 1.
Fig. 4(a), (b), and (c) illustrates an example of scrolling using the operation unit in Fig. 1.
Fig. 5 shows an example configuration of the file management information database in Fig. 1.
Fig. 6 schematically shows, for photographic image data, cluster layers based on information on time of photography in the file management information database in Fig. 5.
Fig. 7 shows an example configuration of the scrolling control information database in Fig. 1.
Fig. 8 is a flowchart showing the flow of display control processing by the CPU in Fig. 1.
Figs. 9A and 9B illustrate an example of the CPU in Fig. 1 controlling the scrolling speed.
Fig. 10 is a functional block diagram of a data display device according to embodiment 2.
Fig. 11 is a flowchart showing the flow of display control processing by the CPU in Fig. 10.
Fig. 12 shows an example of a screen displayed by the display unit in Fig. 10.
Fig. 13 is a functional block diagram of a data display device according to embodiment 3.
Fig. 14 shows an example of a screen displayed by the display unit in Fig. 13.
Fig. 15 shows an example configuration of the file management information database in Fig. 13.
Fig. 16 is a flowchart showing the flow of display control processing by the CPU in Fig. 13.
Fig. 17 shows an example of a screen displayed by the display unit in Fig. 13.
Fig. 18 is a functional block diagram of a data display device according to embodiment 4.
Fig. 19 is a flowchart showing the flow of display control processing by the CPU in Fig. 18.
Fig. 20 shows an example of a screen displayed by the display unit in Fig. 18.
Figs. 21A and 21B shows examples of variable control of the scrolling speed within a cluster.
Figs. 22A, 22B, 22C, and 22D illustrate an example of variable control of the scrolling speed within a cluster.
Fig. 23 shows an example of a screen displayed by the display unit in order to illustrate a modification to embodiment 2.
Fig. 24 shows an example of a screen displayed by the display unit in order to illustrate a modification to embodiment 3.
Fig. 25 shows another example configuration of the file management information database in embodiment 3.
Fig. 26 shows an example of a screen displayed by the display unit in order to illustrate a modification to embodiment 4.
Fig. 27 shows an example of a screen displayed by the display unit in order to illustrate another modification to embodiment 4.
Fig. 28 shows an example of a screen displayed by the display unit in order to illustrate yet another modification to embodiment 4.
Fig. 29 shows an example of a screen displayed by the display unit in order to illustrate a method of exhibiting the position of a cluster within the entire photographic image data.
Fig. 30 shows an example of a screen displayed by the display unit in order to illustrate another method of exhibiting the position of a cluster within the entire photographic image data.
Fig. 31 shows an example of a screen displayed by the display unit in order to illustrate yet another method of exhibiting the position of a cluster within the entire photographic image data.
Fig. 32 shows an example of a screen displayed by the display unit in order to illustrate a method of exhibiting the positions, within the entire photographic image data, of both a cluster and of pieces of photographic image data currently being displayed.
Fig. 33 shows an example of a screen displayed by the display unit in order to illustrate another method of exhibiting the positions, within the entire photographic image data, of both a cluster and of pieces of photographic image data currently being displayed.
Fig. 34 shows an example of a screen displayed by the display unit in order to illustrate yet another method of exhibiting the positions, within the entire photographic image data, of both a cluster and of pieces of photographic image data currently being displayed.
Fig. 35 shows an example of a screen displayed by the display unit in order to illustrate yet another method of exhibiting the positions, within the entire photographic image data, of both a cluster and of pieces of photographic image data currently being displayed.
Fig. 36 shows an example of a screen displayed by the display unit in order to illustrate a method of exhibiting statistical information on scrolled photographic image data.
Fig. 37 shows an example of a screen displayed by the display unit in order to illustrate another method of exhibiting statistical information on scrolled photographic image data.
Fig. 38 shows an example of a screen displayed by the display unit in order to illustrate a method of exhibiting representative information for a cluster.
Fig. 39 shows an example of a screen displayed by the display unit in order to illustrate another method of exhibiting representative information for a cluster.
Fig. 40 shows an example of a screen displayed by the display unit in order to illustrate a method of emphasizing the display of representative photographic image data.
Fig. 41 shows an example of a screen displayed by the display unit in order to illustrate another method of emphasizing the display of representative photographic image data.

### [Description of Embodiments]

### <<Embodiment 1>>

Embodiment 1 of the present invention is described below with reference to the drawings.

### <Device Configuration>

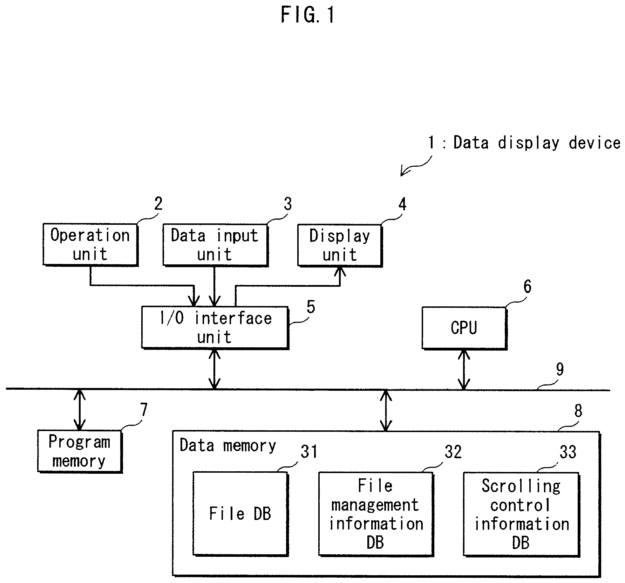

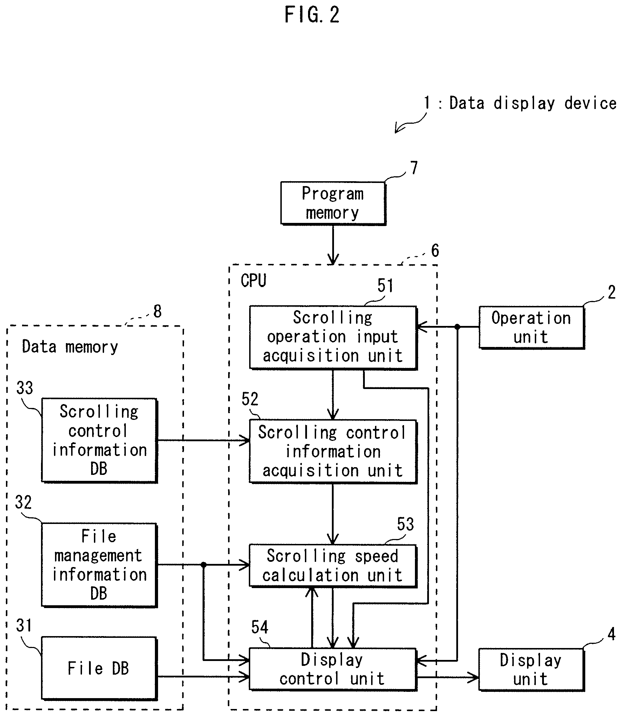

Fig. 1 is a hardware block diagram of a data display device according to embodiment 1, and Fig. 2 is a functional block diagram of the data display device in Fig. 1. In Fig. 2, however, the CPU 6 is shown directly connected to the operation unit 2, display unit 4, program memory 7, and data memory 8, and the data input unit 3, I/O interface unit 5, and bus 9 are omitted. Note that the data display devices in other embodiments have substantially the same hardware configuration as in Fig. 1. Furthermore, the functional block diagrams for the other embodiments are similarly simplified.

The data display device 1 comprises an operation unit 2, data input unit 3, display unit 4, I/O interface unit 5, central processing unit (CPU) 6, program memory 7, data memory 8, and bus 9.

The operation unit 2 is a device for the user to operate the data display device 1 and to manipulate data displayed on the display unit 4 of the data display device 1. The operation unit 2 includes, for example, keys, switches, a touchpad or touch panel, etc. The data input unit 3 is a device for inputting file data such as photographic image data, dynamic image data such as video, music data, etc. into the data memory 8. The display unit 4 is a display device that includes, for example, a liquid crystal display or the like. A touch panel constituting the operation unit 2 is provided above the display screen. The I/O interface unit 5 is an interface that performs input and output processing on data between the operation unit 2, data input unit 3, and display unit 4 on the one hand and the CPU 6 on the other.

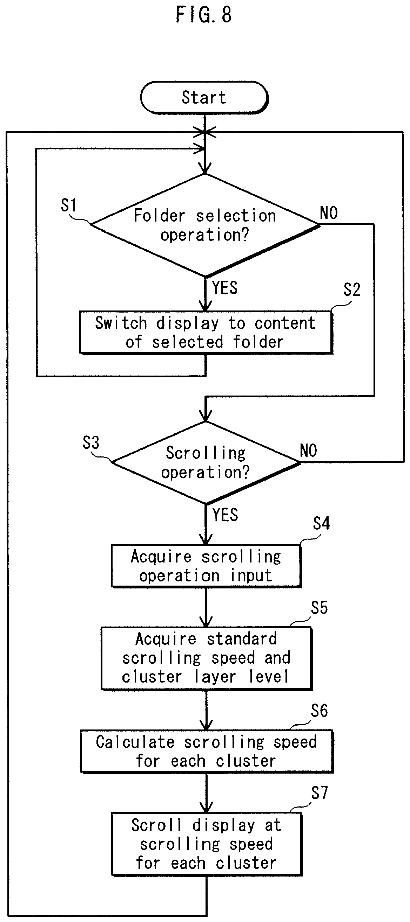

The CPU 6 controls the entire data display device 1 and performs computation, makes logical decisions, etc. for each type of processing. For example, the CPU 6 controls input and output processing of data by the I/O interface unit 5 and executes the display control processing indicated by the operation flow in Fig. 8.

The program memory 7 stores a variety of control programs for controlling the data display device 1 and a variety of application programs. For example, the program memory 7 stores a viewer application program for viewing the data, the viewer application program describing the procedures shown in the operation flow in Fig. 8. In addition to a file database 31, file management information database 32, and scrolling control information database 33, the data memory 8 stores, for example, data produced by each of the processes in the CPU 6. The program memory 7 and data memory 8 are storage devices including a large capacity media disc, e.g. a hard disk drive (HDD), digital versatile disc (DVD), etc., and a semiconductor memory.

The bus 9 transfers control signals for controlling each constituent element and data that is exchanged between each constituent element.

### <Example of Display Screen in Display Unit>

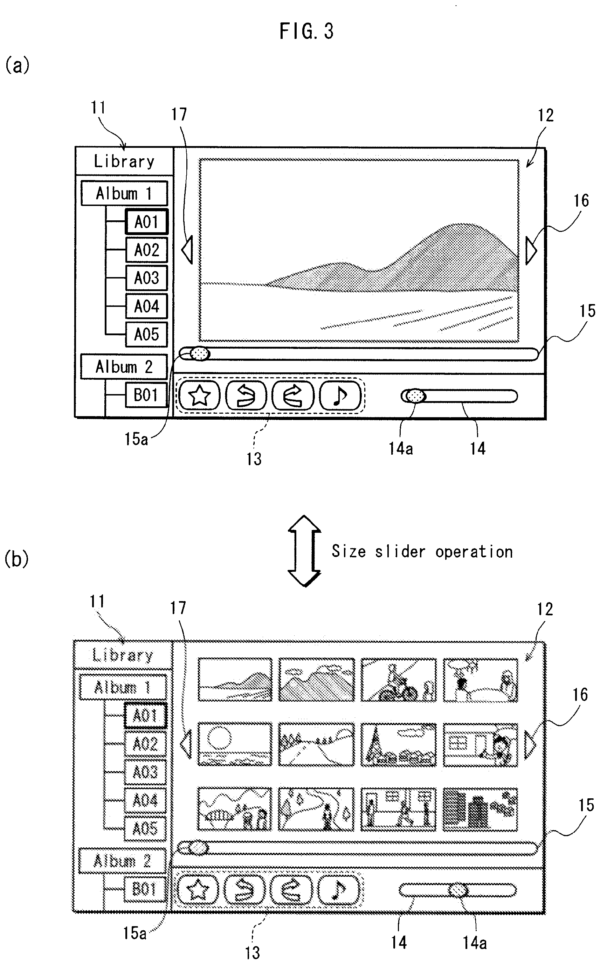

Fig. 3(a) and (b) shows examples of screens displayed by the display unit 4 in Fig. 1. In the examples in Fig. 3(a) and (b), the file data is photographic image data. Note that the file data is also photographic image data in the other examples of display screens.

In the examples in Fig. 3(a) and (b), an album library 11, thumbnail display area 12, menu buttons 13, size scrollbar 14, display position scrollbar 15, right button 16, and left button 17 are displayed. Note that the touch panel constituting the operation unit 2 is provided above the display screen of the display unit 4.

The album library 11 is composed of a layered folder representing, for example, photo albums. Each photo album is a single folder or the like in which multiple pieces of photographic image data are saved. The user can select a desired folder by touching a folder displayed in the album library 11. A bold frame is displayed around the selected folder (in the examples in Fig. 3(a) and (b), the folder "A01"), and thumbnail images of the photographic image data in the selected folder are displayed in the thumbnail display area 12. Note that, while not shown in the figures, buttons for scrolling up and down are provided in the album library 11. The user can push these buttons to change the folders displayed in the album library 11.

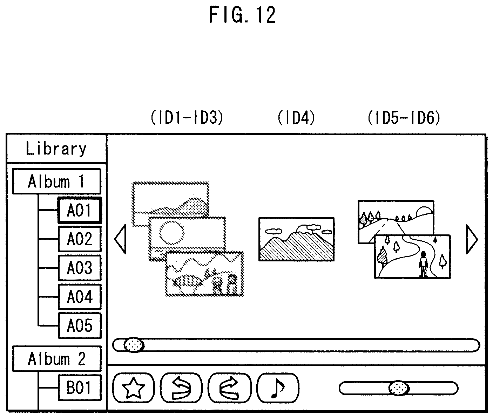

The thumbnail display area 12 is an area for displaying thumbnails for the photographic image data in the selected folder. One thumbnail is shown in Fig. 3(a), and 12 in (b). The menu buttons 13 are buttons that, for example, select an image as a favorite, rotate a selected image to the left or right, select slideshow playback, etc.

The size scrollbar 14 is a scrollbar to change the number of thumbnails displayed in the thumbnail display area 12. A slider 14a that the user uses to change the number of thumbnails displayed is provided in the size scrollbar 14. By sliding the slider 14a to the left or right, the user can switch between the display screen displaying one thumbnail shown in Fig. 3(a) and the display screen displaying 12 thumbnails shown in (b).

The display position scrollbar 15 is a scrollbar for changing the position of the photographic image data that is shown in the display screen and is arranged, for example, in order of time of photography. A slider 15a that the user uses to change the position of the displayed photographic image data is provided in the display position scrollbar 15.

The right button 16 is, for example, a button to scroll the series of thumbnails one column from right to left, and the left button 17 is, for example, a button to scroll the series of thumbnails one column from left to right.

### <Example of Scrolling>

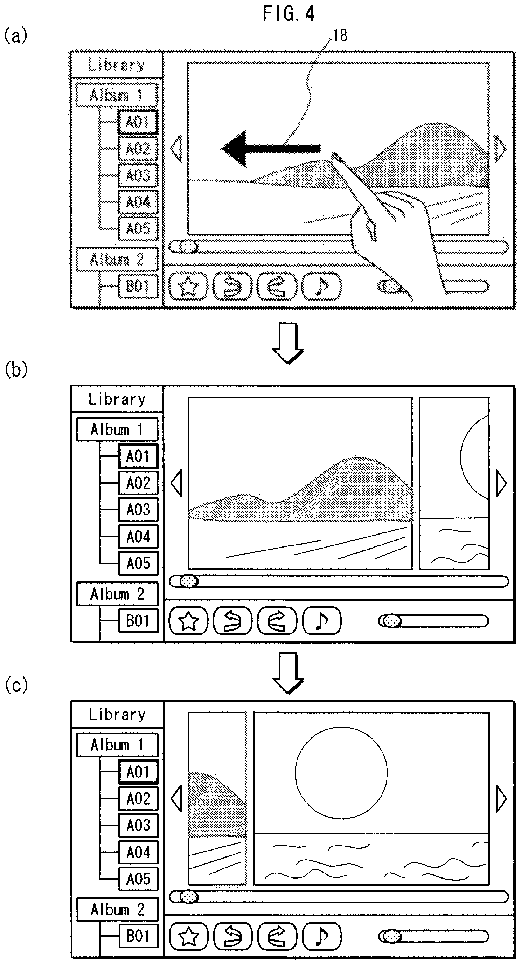

Fig. 4(a), (b), and (c) illustrates an example of scrolling using the operation unit 2 in Fig. 1.

On the display screen in Fig. 4(a), the series of thumbnails is not in motion. When the series of thumbnails is not in motion, the user can cause the thumbnail sequence to scroll from the right to the left (the direction of the arrow 18 in Fig. 4(a)) by moving his finger from the right to the left while touching the touch panel located above the display screen. Via this scrolling operation, the thumbnail sequence on the display screen of the display unit 4 scrolls from right to left, changing successively from Fig. 4(a)to (b) and (c).

Conversely, to cause the thumbnail sequence to scroll from the left to the right, the user moves his finger from the left to the right while touching the touch panel located above the display screen. In this example, the user performs a scrolling operation while the thumbnail sequence is not in motion, yet the user may perform scrolling operations while the thumbnail sequence is scrolling.

Note that hereinafter, the distance from where the user touches the touch panel at the start of a scrolling operation to where the user's finger stops touching the touch panel at the end of the scrolling operation is referred to as the "operation distance". The acceleration of the user's finger from the start to the end of the scrolling operation is referred to as "operation acceleration". The direction from the start to the end of the scrolling operation is referred to as the "scrolling direction".

### <Content of Each Database in the Data Memory>

The file database (hereinafter "file DB") 31 is a database for storing the pieces of file data input from the data input unit 3.

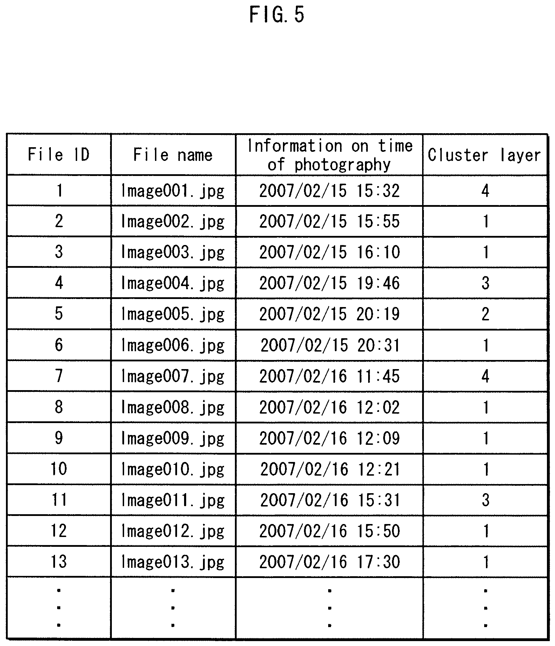

The file management information database (hereinafter "file management information DB") 32, an example of which is shown in Fig. 5, is a database for storing file management information such as attribute information, cluster information, etc. on the file data stored in the file DB 31. Fig. 5 shows an example configuration of the file management information DB 32 in Fig. 1 when file data is photographic image data.

In the file management information DB 32, for each piece of photographic image data, a uniquely assigned file ID is associated with a file name for the piece of photographic image data, information on time of photography indicating when the photographic image was captured, and a cluster layer. While not shown in the figure, folder information is also stored in the file management information DB 32 for the photographic image data for each file ID.

In general, clusters are a collection of data resulting when data is divided according to certain conditions. For example, clusters may be a collection of photographic image data organized by events, such as a trip, an entrance ceremony, etc.

The clusters in this embodiment are a collection of photographic image data divided based on the distance between the information on time of photography for the photographic images. In the example in Fig. 5, four layers of clusters have been created based on the distance between the information on time of photography for the photographic images in the photographic image data. However, a known method of clustering may be used, such as Ward's method using mean Euclidean distance, the centroid method, or the median method.

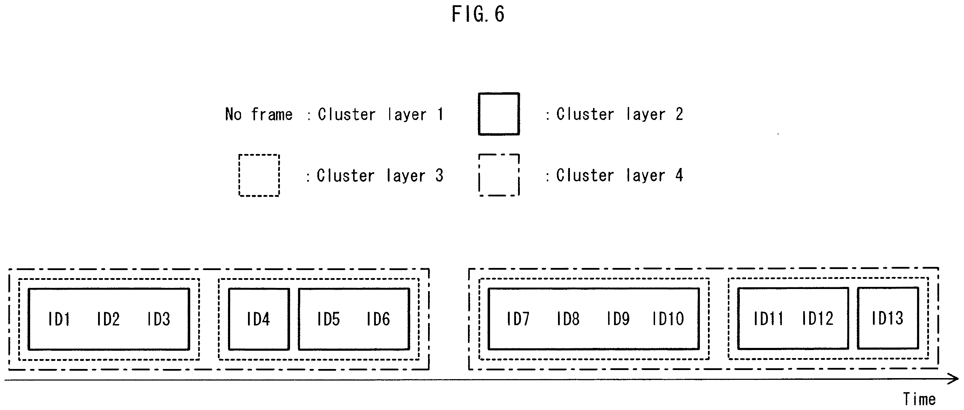

Fig. 6 schematically shows, for photographic image data, cluster layers based on information on time of photography in the file management information DB 32 in Fig. 5. Note that in Fig. 6, "ID1" represents a piece of photographic image data whose file ID is "1".

In cluster layer "1", each piece of photographic image data is in a different cluster. In cluster layer "2", the pieces of photographic image data surrounded by a solid line form one cluster. In cluster layer "3", the pieces of photographic image data surrounded by a dashed line form one cluster. In cluster layer "4", the pieces of photographic image data surrounded by an alternating long and short dashed line form one cluster. In Fig. 5, the cluster layer corresponding to each piece of photographic image data indicates the highest of the cluster layers in which the piece of photographic image data is the top piece in the cluster.

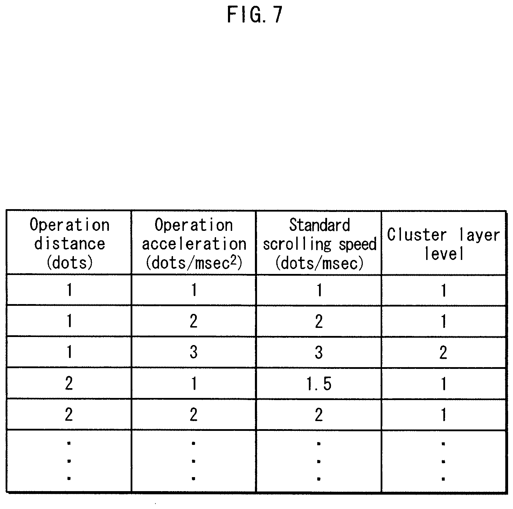

The scrolling control information database (hereinafter "scrolling control information DB") 33, an example of which is shown in Fig. 7, is a database for recording scrolling control information that controls the speed of a scrolling display. Fig. 7 shows an example configuration of the scrolling control information DB 33 in Fig. 1.

In the scrolling control information DB 33, a standard scrolling speed and a cluster layer level are associated with an operation distance and an operation acceleration. The operation distance and operation acceleration are as described above. The standard scrolling speed indicates the standard scroll speed for the scrolling display, and the cluster layer level indicates the cluster layer for showing the user a grouping of pieces of photographic image data. For example, when the cluster layer level is "2", the scrolling speed is controlled for clusters in cluster layer "2".

### <Functional Configuration of CPU>

From the program memory 7, the CPU 6 reads a viewer application program that describes the procedures shown in the operation flow in Fig. 8 and executes the viewer application program that has been read. The CPU 6 thereby functions as a scrolling operation input acquisition unit 51, scrolling control information acquisition unit 52, scrolling speed calculation unit 53, and display control unit 54.

Based on the operation signal input from the operation unit 2 via the I/O interface unit 5 and bus 9, the scrolling operation input acquisition unit 51 acquires the scrolling direction, operation distance, and operation acceleration for a scrolling operation by the user. The scrolling operation input acquisition unit 51 outputs the acquired scrolling direction to the display control unit 54 and the acquired operation distance and operation acceleration to the scrolling control information acquisition unit 52.

The scrolling control information acquisition unit 52 refers to the contents stored in the scrolling control information DB 33 to acquire the standard scrolling speed and cluster layer level associated with the operation distance and operation acceleration input from the scrolling operation input acquisition unit 51. The scrolling control information acquisition unit 52 outputs the acquired standard scrolling speed and cluster layer level to the scrolling speed calculation unit 53.

Folder information indicating the folder selected by the user is input into the scrolling speed calculation unit 53 from the display control unit 54, and the standard scrolling speed and cluster layer level are input into the scrolling speed calculation unit 53 from the scrolling control information acquisition unit 52. For the folder selected by the user, the scrolling speed calculation unit 53 calculates the scrolling speed for each cluster at the cluster layer level based on the standard scrolling speed and cluster layer level, outputting the scrolling speed for each cluster to the display control unit 54. However, the scrolling speed calculation unit 53 calculates the scrolling speed for each cluster so that the display time of each cluster remains constant.

The following is an explanation of a method for calculating the scrolling speed of a cluster. Note that for the sake of simplicity, the distance between thumbnails is assumed to be zero.

For each piece of photographic image data, the scrolling speed calculation unit 53 refers to the folder information (not shown in Fig. 5, as described above) in the file management information DB 32, thus acquiring "L", the total number of pieces of photographic image data in the folder selected by the user. The scrolling speed calculation unit 53 multiplies the width of thumbnails "d" by "L" and divides the result "dL" by the standard scrolling speed "V". The scrolling speed calculation unit 53 thereby calculates "dL/V", the time necessary to display thumbnails for the entire photographic image data in the folder selected by the user (hereinafter "total display time") when the display scrolls at the standard speed "V".

Next, for each piece of photographic image data, the scrolling speed calculation unit 53 refers to the folder information and cluster layer in the file management information DB 32 to acquire "M", the number of clusters at the cluster layer level in the folder selected by the user. The scrolling speed calculation unit 53 divides the total display time "dL/V" by the number of clusters "M", thereby calculating "dL / (VM) = T_{A}", i.e. the time for scrolling through one cluster (hereinafter "cluster display time").

Furthermore, the scrolling speed calculation unit 53 performs the following processes for each cluster in the cluster layer level. For each piece of photographic image data, the scrolling speed calculation unit 53 refers to the folder information and cluster layer in the file management information DB 32, thus acquiring "N_{A}", the number of pieces of photographic image data in a cluster. The scrolling speed calculation unit 53 multiplies the width of thumbnails "d" by "N_{A}" and divides the result "N_{A}d" by the cluster display time T_{A}. The scrolling speed calculation unit 53 thereby calculates "N_{A}d / T_{A} = V_{A}", the cluster scrolling speed.

This method of calculating scrolling speed is only an example, however, and the method is not limited in this way. For example, in the above-described method of calculating scrolling speed, division by the thumbnail width "d" may be omitted.

An operation signal is input into the display control unit 54 from the operation unit 2 via the I/O interface unit 5 and the bus 9, and the display control unit 54 switches the display screen on the display unit 4 in accordance with the operation signal. For example, when the user selects a folder in the album library 11, the display control unit 54 displays a bold frame around the selected folder, displays thumbnails for the photographic image data in the selected folder in the thumbnail display area 12, and outputs folder information for the folder selected by the user to the scrolling speed calculation unit 53.

The scrolling direction is also input into the display control unit 54 from the scrolling operation input acquisition unit 51, and the scrolling speed for each cluster is input into the display control unit 54 from the scrolling speed calculation unit 53. While referring to the file management information DB 32, as it reads the photographic image data in the selected folder from the file DB 31, the display control unit 54 scrolls, on the display unit 4, the thumbnail sequence for photographic image data in the selected folder. The thumbnail sequence is scrolled in the scrolling direction and at the scrolling speed for each cluster.

Note that the scrolling speed of the thumbnail sequence displayed in the thumbnail display area 12 may be, for example, the scrolling speed of the cluster corresponding to the thumbnail located in the middle of the thumbnail display area 12, the scrolling speed of the cluster whose thumbnails have the largest display area in the thumbnail display area 12, the scrolling speed of the cluster with the most thumbnails shown on the thumbnail display area 12, etc.

### <Operation of the CPU>

Fig. 8 is a flowchart showing the flow of display control processing by the CPU 6 in Fig. 1. Note that the user selects a folder or performs a scrolling operation on the touch panel provided above the display screen of the display unit 4 in order, for example, to peruse photographic image data, to search for a desired piece of photographic image data, to change the scrolling speed, etc.

The display control unit 54 receives an operation signal from the operation unit 2 and, based on the received operation signal, determines whether the user operation is a folder selection operation (step S1). If the user operation is not a folder selection operation (S1: NO), the processing in step S3 is performed. On the other hand, if the user operation is a folder selection operation (S1: YES), then based on the acquired operation signal, the display control unit 54 switches the display on the display unit 4 to the contents of the folder the user selected (step S2). The processing in step S 1 is then performed.

The scrolling operation input acquisition unit 51 receives an operation signal from the operation unit 2 and, based on the received operation signal, determines whether the user operation is a scrolling operation (step S3). If the user operation is not a scrolling operation (S3: NO), the processing in step S1 is performed. On the other hand, if the user operation is a scrolling operation (S3: YES), then based on the operation signal acquired from the operation unit 2, the scrolling operation input acquisition unit 51 acquires the scrolling operation input (scrolling direction, operation distance, and operation acceleration) (step S4).

The scrolling control information acquisition unit 52 refers to the contents recorded in the scrolling control information DB 33 and acquires the standard scrolling speed and cluster layer level associated with the operation distance and operation acceleration acquired in step S4 (step S5). Next, the scrolling speed calculation unit 53 calculates the scrolling speed for each cluster at the cluster layer level based on the standard scrolling speed and cluster layer level acquired in step S5 (step S6).

The display control unit 54 scrolls, on the display unit 4, the thumbnail sequence for the photographic image data in the user selected folder at the scrolling speed for each cluster, as calculated in step S6, and in the scrolling direction acquired in step S4 (step S7).

Note that each time the user selects a folder (S1: YES), the processing in step S2 is-performed, and each time a scrolling operation is performed (S3: YES), the processing in steps S4-S7 is performed.

### <Example of Controlling Scrolling Speed>

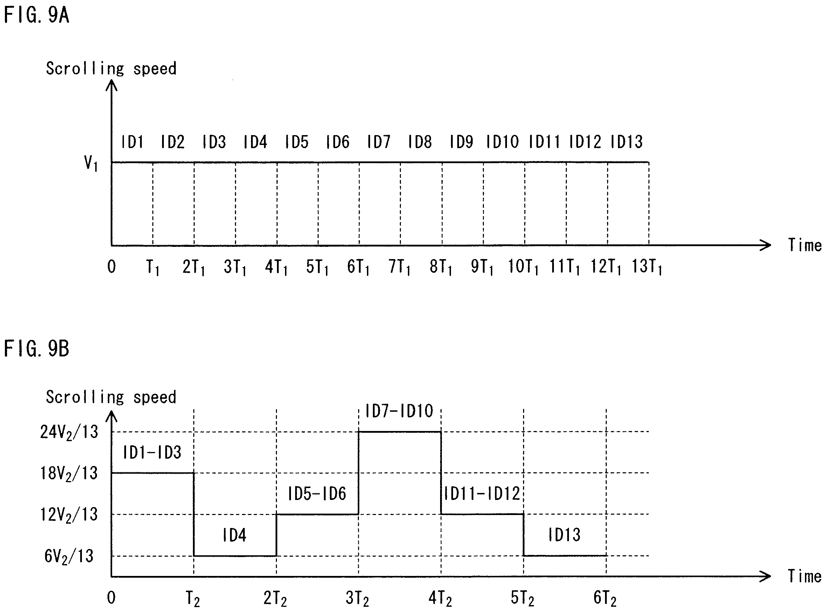

Fig. 9A illustrates an example of the CPU 6 in Fig. 1 controlling the scrolling speed when the standard scrolling speed, acquired by referring to the scrolling control information DB 33, is "V₁", and the cluster layer level is "1".

Fig. 9A and Fig. 9B, which is described below, correspond to the cluster layers in Figs. 5 and 6. The horizontal axis represents time, and the vertical axis the scrolling speed. Note that in Figs. 9A and 9B, "ID1" for example represents photographic image data whose file ID is "1", and "ID1-ID3" represents photographic image data whose file IDs are "1", "2", and "3".

The scrolling speed calculation unit 53 calculates the scrolling speed "V₁ = V_{A}" for each cluster (one piece of photographic image data is included in each cluster). The display control unit 54 scrolls, on the display unit 4, the thumbnail sequence for the photographic image data corresponding to ID1-ID13 at the scrolling speed "V₁" for the clusters. When the cluster layer level is "1", each piece of photographic image data is a separate cluster, and thus the thumbnail sequence is scrolled at a fixed speed.

Fig. 9B illustrates an example of the CPU 6 in Fig. 1 controlling the scrolling speed when the standard scrolling speed, acquired by referring to the scrolling control information DB 33, is "V₂" and the cluster layer level is "2".

The scrolling speed calculation unit 53 multiplies the thumbnail width "d" by the number of pieces of photographic image data "13" and divides the result "d × 13" by the standard scrolling speed "V₂" to calculate the total display time, "d × 13 / V₂". Next, the scrolling speed calculation unit 53 acquires the number of clusters, "6", at the cluster layer level "2" and divides the total display time "d × 13 / V₂" by the number of clusters "6" to calculate the cluster display time, "d x 13 / (V₂ x 6) = T₂".

Furthermore, the scrolling speed calculation unit 53 acquires the number of pieces of photographic image data, "3", in the cluster that includes ID1-ID3, multiplies the thumbnail width "d" by the number of pieces of photographic image data, "3", and divides the result "3d" by the cluster display time "13d / (6V₂)" to calculate the scrolling speed for the cluster that includes ID1-ID3, "18V₂ / 13 = V_{A,1}".

By performing the same processing, the scrolling speed calculation unit 53 calculates the scrolling speed for the cluster that includes ID4, "6V₂ / 13 = V_{A,2}"; the scrolling speed for the cluster that includes ID5-ID6, "12V₂ / 13 = V_{A,3}"; the scrolling speed for the cluster that includes ID7-ID10, "24V₂ / 13 = V_{A,4}"; the scrolling speed for the cluster that includes ID11-ID12, "12V₂ / 13 = V_{A,5}"; and the scrolling speed for the cluster that includes ID13, "6V₂ / 13 = V_{A,6}".

The display control unit 54 scrolls, on the display unit 4, the thumbnail sequence for the photographic image data corresponding to ID1-ID13 at the appropriate scrolling speed "V_{A,1}-V_{A,6}" for each cluster. For example, the thumbnail sequence for the photographic image data corresponding to ID1-ID3 is scrolled during a period "0" - "T₂" at a scrolling speed of "18V₂ / 13", and the thumbnail sequence for the photographic image data corresponding to ID4 is scrolled during a period "T₂" - "2T₂" at a scrolling speed of "6V₂ / 13".

Thus switching the scrolling speed for each cluster allows the user to easily achieve an understanding of a grouping of photographic image data. It also makes viewing photographic image data and searching for a desired image easy and efficient.

Furthermore, since the cluster layer level of the clusters shown to the user is determined in accordance with the operation distance and the operation acceleration of a scrolling operation, users themselves can designate, via the scrolling operation, the grouping of photographic image data in which they are interested.

### <<Embodiment 2>>

Embodiment 2 of the present invention is described below with reference to the drawings. Note that in embodiment 2, constituent elements that are substantially the same as embodiment 1 bear the same labels. An explanation of these elements is omitted here, since the explanation thereof in embodiment 1 applies.

The data display device 1 in embodiment 1 scrolls a thumbnail sequence while varying the scrolling speed for clusters at a cluster layer level. By contrast, the data display device 1a in embodiment 2 scrolls a thumbnail sequence while varying the layout position on the display screen in the display unit 4 of the thumbnails for clusters at a cluster layer level.

### <Device Configuration>

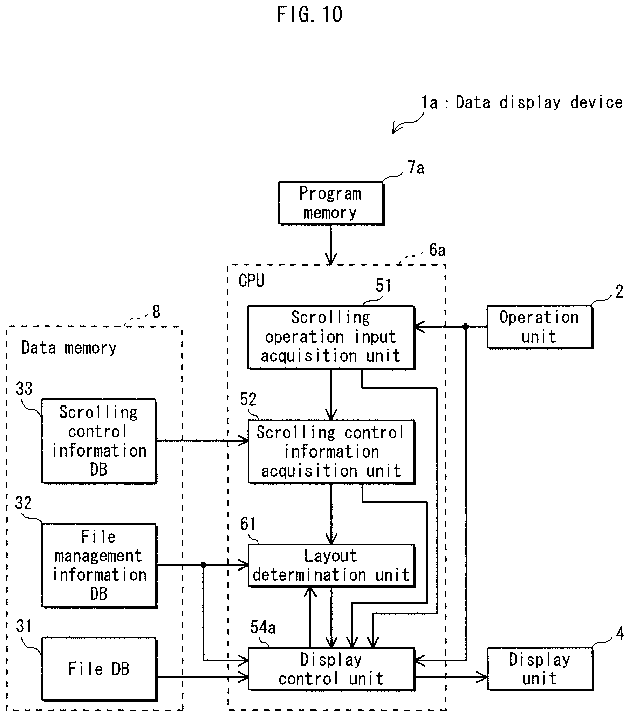

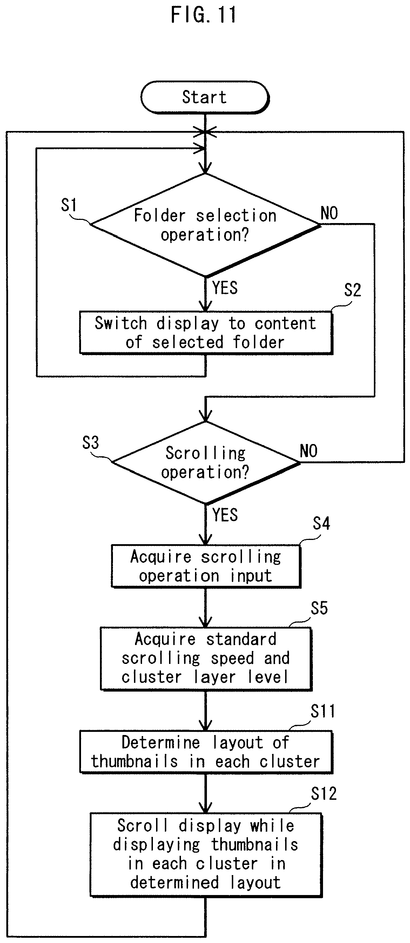

Fig. 10 is a functional block diagram of a data display device 1a according to embodiment 2. The CPU 6a performs, for example, the display control processing shown in the operation flow in Fig. 11. The program memory 7a stores, for example, a viewer application program describing the procedures shown in the operation flow in Fig. 11.

### <Functional Configuration of CPU>

The CPU 6a reads the viewer application program describing the procedures shown in the operation flow in Fig. 11 from the program memory 7a and executes the viewer application program that has been read. The CPU 6a thereby functions as a scrolling operation input acquisition unit 51, scrolling control information acquisition unit 52, layout determination unit 61, and display control unit 54a.

Folder information indicating the folder selected by the user is input into the layout determination unit 61 from the display control unit 54a, and the cluster layer level is input into the layout determination unit 61 from the scrolling control information acquisition unit 52. In the user selected folder, based on the cluster layer level, the layout determination unit 61 determines, for each cluster at the cluster layer level, how the thumbnail for each piece of photographic image data in the cluster should be positioned on the thumbnail display area 12 of the display unit 4. The layout determination unit 61 outputs layout information indicating the determined layout to the display control unit 54a.

The following describes an example method for determining the layout of thumbnails in each cluster.

When the cluster layer level is "1", each piece of photographic image data is a separate cluster, and thus the layout determination unit 61 determines to display the thumbnail for a piece of photographic image data in a cluster on the thumbnail display area 12 of the display unit 4 without overlapping with the thumbnail for a piece of photographic image data in another cluster.

When the cluster layer level is not "1", then for each cluster at the cluster layer level, the layout determination unit 61 determines the layout of the thumbnails for the photographic image data in the cluster in the following way. For each piece of photographic image data, the layout determination unit 61 refers to the folder information (not shown in Fig. 5, as described above) and the cluster layer in the file management information DB 32, thus acquiring the number of pieces of photographic image data in the cluster. Based on the acquired number of pieces of photographic image data and the display size of a thumbnail, the layout determination unit 61 determines how many thumbnails to display in a column and how many columns to display. The layout determination unit 61 also determines the layout of thumbnails for the photographic image data so that each thumbnail at least partially overlaps with another thumbnail for photographic image data within the same cluster and so that the thumbnails for photographic image data within different clusters do not overlap.

An operation signal is input into the display control unit 54a from the operation unit 2 via the I/O interface unit 5 and the bus 9, and the display control unit 54a switches the display screen on the display unit 4 in accordance with the operation signal. For example, when the user selects a folder in the album library 11, the display control unit 54a displays a bold frame around the selected folder, displays thumbnails for the photographic image data in the selected folder in the thumbnail display area 12, and outputs folder information for the folder selected by the user to the layout determination unit 61.

The scrolling direction is also input into the display control unit 54a from the scrolling operation input acquisition unit 51, and the standard scrolling speed is input into the display control unit 54a from the scrolling control information acquisition unit 52. While referring to the file management information DB 32, as it reads the photographic image data in the selected folder from the file DB 31, the display control unit 54a first positions, in the thumbnail display area 12 of the display unit 4, the thumbnail for each piece of photographic image data in the selected folder in accordance with the layout information and then scrolls, on the display unit 4, the thumbnail sequence for the photographic image data. The thumbnail sequence is scrolled in the scrolling direction and at the standard scrolling speed.

### <Operation of the CPU>

Fig. 11 is a flowchart showing the flow of display control processing by the CPU 6a in Fig. 10. Note that the user selects a folder or performs a scrolling operation on the touch panel provided above the display screen of the display unit 4 in order, for example, to peruse photographic image data, to search for a desired piece of photographic image data, to change the scrolling speed or the cluster layer level, etc.

The display control unit 54a, scrolling operation input acquisition unit 51, and scrolling control information acquisition unit 52 perform substantially the same processing as in steps S1-S5 of Fig. 8. Based on the cluster layer level acquired in step S5, the layout determination unit 61 determines, for each cluster at the cluster layer level, how to position the thumbnail for each piece of photographic image data in the cluster on the thumbnail display area 12 of the display unit 4 (step S11).

While positioning the thumbnail sequence for the photographic image data in the user selected folder on the thumbnail display area 12 in accordance with the determination in step S11, the display control unit 54a scrolls the thumbnail sequence on the display unit 4 in the scrolling direction acquired in step S4 and at the standard scrolling speed acquired in step S5 (step S12).

Note that each time the user selects a folder (S1: YES), the processing in step S2 is performed, and each time a scrolling operation is performed (S3: YES), the processing in steps S4, S5, S11, and S 12 is performed.

### <Example of Controlling Thumbnail Layout>

With reference to Fig. 12, the following describes an example of the CPU 6a in Fig. 10 controlling thumbnail layout. Fig. 12 shows an example of a screen displayed by the display unit 4 in Fig. 10. Note that Fig. 12 corresponds to the cluster layer in Figs. 5 and 6. When the cluster layer level is "2", the pieces of photographic image data corresponding to file IDs "1" - "3" form one cluster, the piece of photographic image data corresponding to file ID "4" forms one cluster, and the pieces of photographic image data corresponding to file IDs "5" and "6" form one cluster. Note that the label (ID1-ID3) in Fig. 12 indicates that the thumbnails positioned below are the thumbnails for the pieces of photographic image data for file IDs "1" - "3".

Suppose the standard scrolling speed for the user scrolling operation is "V", and the cluster layer level "2". Since the pieces of photographic image data for "ID1" - "ID3" form one cluster, the layout determination unit 61 determines the layout of thumbnails for the pieces of photographic image data for "ID1" - "ID3" so that each thumbnail partially overlaps with a different thumbnail in the cluster "ID1" - "ID3" yet does not overlap with thumbnails for pieces of photographic image data for other clusters, such as "ID4". Note that for the cluster including the pieces of photographic image data for "ID4" and the cluster including the piece of photographic image data for "ID5" - "ID6", the layout determination unit 61 similarly determines the layout of the thumbnail for the piece of photographic image data for "ID4" and the layout of thumbnails for the pieces of photographic image data for "ID5" - "ID6".

While positioning the thumbnails for the pieces of photographic image data on the thumbnail display area 12 in accordance with the determination by the layout determination unit 61, the display control unit 54a scrolls, on the display unit 4, the thumbnail sequence for the pieces of photographic image data in the scrolling direction at the standard scrolling speed "V".

The thumbnails for photographic image data included in a cluster are thus displayed overlapping each other, without overlapping the photographic image data included in a different cluster. This allows the user to easily achieve an understanding of a grouping of photographic image data. It also makes viewing photographic image data and searching for a desired image easy and efficient.

Furthermore, since the cluster layer level of the clusters shown to the user is determined in accordance with the operation distance and the operation acceleration of a scrolling operation, users themselves can designate, via the scrolling operation, the grouping of photographic image data in which they are interested.

### <<Embodiment 3>>

Embodiment 3 of the present invention is described below with reference to the drawings. Note that in embodiment 3, constituent elements that are substantially the same as embodiment 1 bear the same labels. An explanation of these elements is omitted here, since the explanation thereof in embodiment 1 applies.

The data display device 1b in embodiment 3 adds, to the data display device 1 in embodiment 1, a function to scroll a thumbnail sequence according to multiple conditions.

### <Device Configuration>

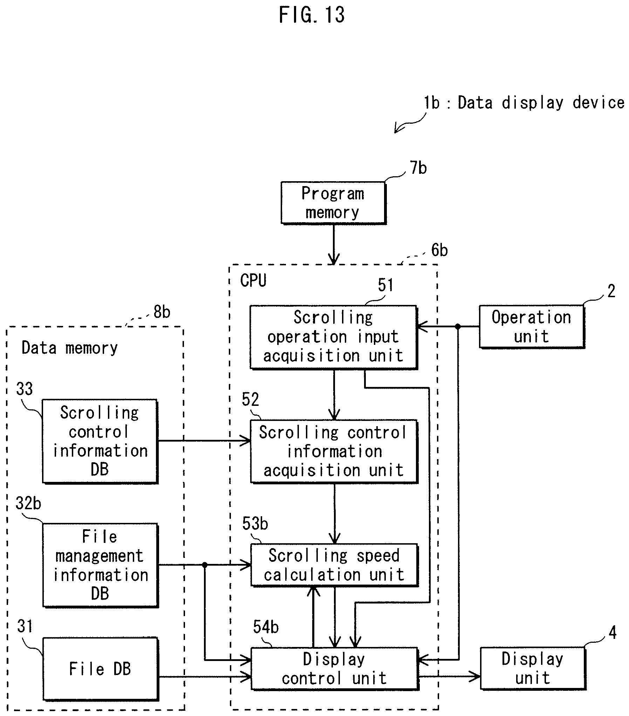

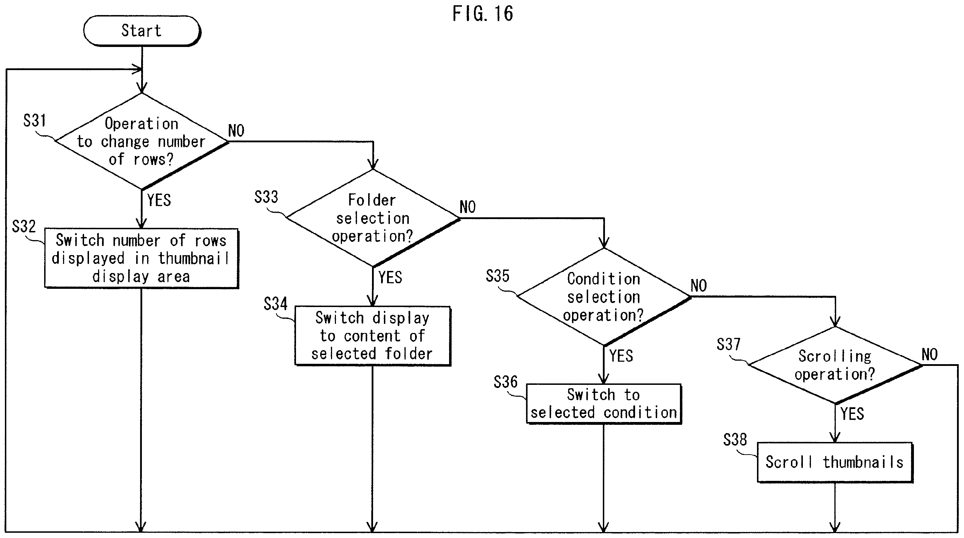

Fig. 13 is a functional block diagram of a data display device 1b according to embodiment 2. The CPU 6b performs, for example, the display control processing shown in the operation flow in Fig. 16. The program memory 7b stores, for example, a viewer application program describing the procedures shown in the operation flow in Fig. 16. The data memory 8b stores, for example, a file DB 31, file management information DB 32b, and scrolling control information DB 33.

### <Example of Display Screen in Display Unit>

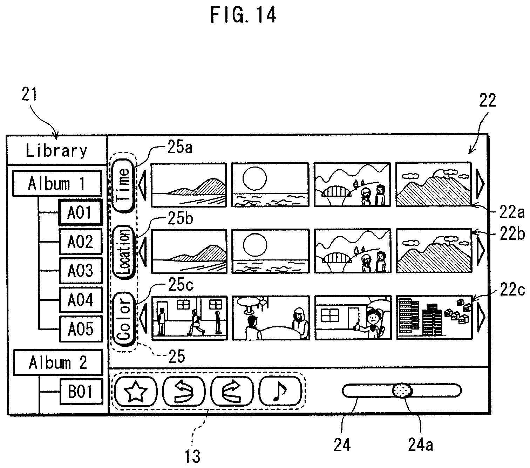

Fig. 14 shows an example of a screen displayed by the display unit 4 in Fig. 13. On the display screen in Fig. 14, an album library 21, thumbnail display area 22, menu buttons 13, row number scroll bar 24, and condition selection buttons 25 are displayed. Note that the touch panel constituting the operation unit 2 is provided above the display screen of the display unit 4.

In the album library 21, each folder for which thumbnails are displayed in each row of the thumbnail display area 22 can be set individually. Apart from being able to set multiple folders individually, the album library 21 is substantially the same as the album library 11.

The thumbnail display area 22 is an area for displaying thumbnails for a photographic image data group for one or more selected folders. In the example in Fig. 14, three photographic image data groups 22a, 22b, and 22c are displayed in three rows in the thumbnail display area 22. The user can perform a scrolling operation individually on the photographic image data groups displayed in the thumbnail display area 22. Note that the number of rows displayed in the thumbnail display area 22 changes in accordance with the user operating the row number scroll bar 24.

The row number scroll bar 24 is a scroll bar for changing the number of rows displayed in the thumbnail display area 22. A slider 24a that the user uses to change the number of rows displayed in the thumbnail display area 22 is provided in the row number scroll bar 24. When the user slides the slider 24a to the right, the number of rows displayed in the thumbnail display area 22 increases, and when the user slides the slider 24a to the left, the number of rows displayed in the thumbnail display area 22 decreases.

The condition selection buttons 25 are buttons for selecting the grouping conditions (hereinafter referred to simply as "conditions" for convenience's sake) for photographic image data to be shown as clusters when scrolling a thumbnail sequence for a photographic image data group displayed in a corresponding display row of the thumbnail display area 22. Each time the user touches the condition selection buttons 25 on the touch panel, the displayed conditions switch. In the example in Fig. 14, the first row is "time" 25a, the second row is "location" 25b, and the third row is "color" 25c.

### <Content of the File Management Information DB in the Data Memory>

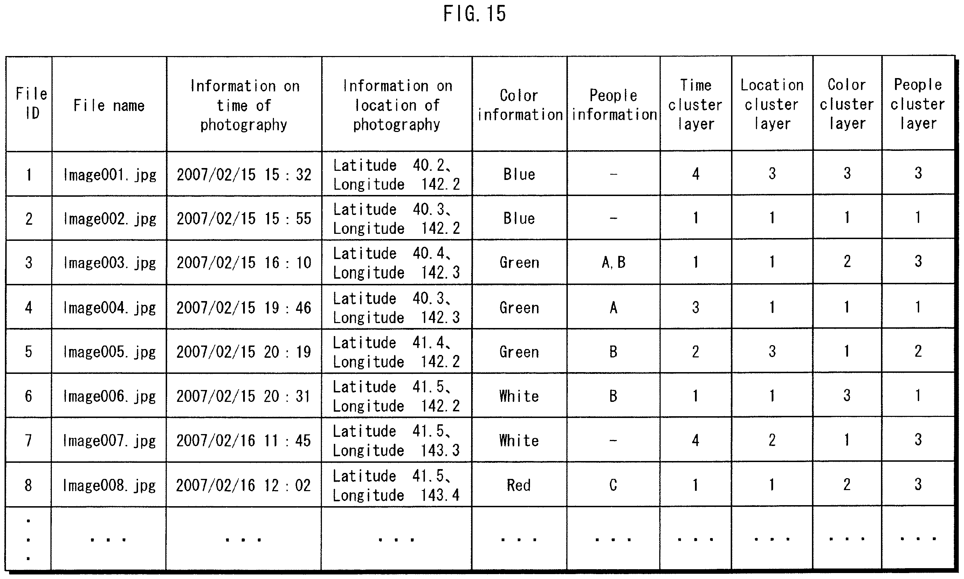

The file management information DB 32b, an example of which is shown in Fig. 15, is a database for storing file management information such as attribute information, cluster information, etc. on the file data stored in the file DB 31. Fig. 15 shows an example configuration of the file management information DB 32b in Fig. 13 when file data is photographic image data.

In the file management information DB 32b, for each piece of photographic image data, a file ID is associated with the following: a file name for the piece of photographic image data, information on time of photography, information on location of photography, color information, people information, time cluster layer, location cluster layer, color cluster layer, and people cluster layer. While not shown in the figure, folder information is also stored in the file management information DB 32b for the photographic image data for each file ID.

The information on time of photography indicates the time at which the photographic image in a piece of photographic image data was captured, whereas photographic place information indicates the place at which the photographic image was captured. Color information indicates the prevalent color in the photographic image, and people information indicates the people pictured in the photographic image.

The time cluster layer is a group of photographic image data resulting from dividing photographic image data based on the distance between the times at which photographic images were captured. The location cluster layer is a group of photographic image data resulting from dividing photographic image data based on the distance between the locations at which photographic images were captured. The color cluster layer is a group of photographic image data resulting from dividing photographic image data based on the distance between colors for the photographic images. The people cluster layer is a group of photographic image data resulting from dividing photographic image data based on the distance between people in photographic images.

In Fig. 15, the time cluster layer, location cluster layer, color cluster layer, and people cluster layer corresponding to each piece of photographic image data indicate the highest of the cluster layers in which the piece of photographic information is the top piece in the cluster.

Note that when the condition selection buttons 25 are set to "time", "location", "color", and "people" ("people" is not shown in Fig. 14), the groups of photographic image data shown to the user when scrolling are determined based on the time cluster layer, location cluster layer, color cluster layer, and people cluster layer.

### <Functional Configuration of CPU>

From the program memory 7b, the CPU 6b reads a viewer application program that describes the procedures shown in the operation flow in Fig. 16 and executes the viewer application program that has been read. The CPU 6b thereby functions as a scrolling operation input acquisition unit 51, scrolling control information acquisition unit 52, scrolling speed calculation unit 53b, and display control unit 54b.

In addition to the information input into the scrolling speed calculation unit 53, the scrolling speed calculation unit 53b also receives condition information from the display control unit 54b. This condition information indicates the condition corresponding to the photographic image data group on which the user performs a scrolling operation. The scrolling speed calculation unit 53b performs substantially the same calculation of scrolling speed for each cluster as the scrolling speed calculation unit 53, but instead of using the cluster layer in the scrolling control information DB 33, the scrolling speed calculation unit 53b uses the cluster layers in the scrolling control information DB 33b corresponding to the condition indicated by the condition information input from the display control unit 54b (e.g. using time cluster information for a condition "time").

An operation signal is input into the display control unit 54b from the operation unit 2 via the I/O interface unit 5 and the bus 9, and the display control unit 54b switches the display screen on the display unit 4 in accordance with the operation signal. For example, when the user performs a scrolling operation, the display control unit 54b outputs to the scrolling speed calculation unit 53b both the folder information indicating the folder for the photographic image data group on which the user performed the scrolling operation as well as condition information indicating the condition corresponding to the photographic image data group on which the user performed the scrolling operation.

The scrolling direction is also input into the display control unit 54b from the scrolling operation input acquisition unit 51, and the scrolling speed for each cluster is input from the scrolling speed calculation unit 53b. While referring to the file management information DB 32b, as it reads from the file DB 31 the photographic image data in the folder corresponding to the photographic image data group on which the scrolling operation was performed, the display control unit 54b scrolls, on the display unit 4, the thumbnail sequence for the photographic image data in the folder. The thumbnail sequence is scrolled in the scrolling direction and at the scrolling speed for each cluster.

### <Operation of the CPU>

Fig. 16 is a flowchart showing the flow of display control processing by the CPU 6b in Fig. 13. Note that the user selects a folder, selects conditions, or performs a scrolling operation on the touch panel provided above the display screen of the display unit 4 in order, for example, to peruse photographic image data, to search for a desired piece of photographic image data, to change the scrolling speed, etc.

The display control unit 54b acquires an operation signal from the operation unit 2 and determines, based on the acquired operation signal, whether the user operation is to change the number of rows displayed in the thumbnail display area 22 (i.e. the number of groups of photographic image data displayed in the thumbnail display area 22) (step S31). If the user operation is to change the number of rows (S31: YES), the display control unit 54b switches the number of rows displayed in the thumbnail display area 22 (i.e. the number of groups of photographic image data displayed in the thumbnail display area 22) to the number of rows indicated by the user operation (step S32), after which the processing in step S31 is performed.

Conversely, if the user operation is not to change the number of rows (S31: NO), then the display control unit 54b determines whether the user operation is a folder selection operation (step S33). If the user operation is a folder selection operation (S33: YES), then the display control unit 54b switches the display in the thumbnail display area 22 for the row that corresponds to the user operation in order to display the content of the user selected folder (step S34), after which the processing in step S31 is performed.

Conversely, if the user operation is not a folder selection operation (S33: NO), then the display control unit 54b determines whether the user operation is a condition selection operation (step S35). If the user operation is a condition selection operation (S35: YES), the display control unit 54b switches the displayed row corresponding to the user operation of the condition selection buttons 25 to the user selected condition (step S36), after which the processing in step S31 is performed.

Conversely, if the user operation is not a condition selection operation (S35: NO), then the scrolling operation input acquisition unit 51 acquires the operation signal from the operation unit 2 and based on the acquired operation signal determines whether the user operation is a scrolling operation (step S37). If the user operation is not a scrolling operation (S37: NO), the processing in step S31 is performed.

Conversely, if the user operation is a scrolling operation (S37: YES), the scrolling operation input acquisition unit 51, scrolling control information acquisition unit 52, and scrolling speed calculation unit 53b calculate the scrolling speed for each cluster under the condition for the display row on which the user performed the scrolling operation in the thumbnail display area 22. Also, the display control unit 54b scrolls, on the display unit 4, the thumbnail sequence for the photographic image data group in the display row for which the user performed the scrolling operation in the thumbnail display area 22, scrolling the thumbnail sequence in the scrolling direction and at the scrolling speed for each cluster (step S38). Note that if, while the thumbnail sequence for one of the groups of photographic image data in the thumbnail display area 22 is being scrolled, the user performs a scrolling operation on another photographic image data group, thumbnail sequences for both groups of photographic image data are scrolled simultaneously.

### <Example of Controlling Scrolling>

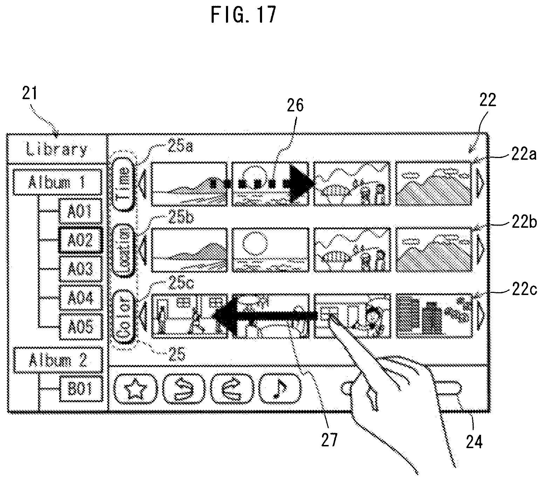

With reference to Fig. 17, the following describes an example of the CPU 6b in Fig. 13 controlling scrolling. Fig. 17 shows an example of a screen displayed by the display unit 4 in Fig. 13.

Suppose the user performs operations on the row number scroll bar 24, album library 21, and condition selection buttons 25 so that, via display control by the display control unit 54b, the display unit 4 displays the screen in Fig. 17. In this display screen, the number of display rows in the thumbnail display area 22 is "3", and the conditions for the first, second, and third rows are, respectively, "time" 25a, "location" 25b, and "color" 25c. Note that the photographic image data groups 22a and 22b in the first and second rows are for the folder "album 1 A01", and the photographic image data group 22c in the third row is for the folder "album A02".

Suppose the user performs a scrolling operation to scroll, from left to right, the thumbnail sequence for the photographic image data group 22a in the first row of the thumbnail display area 22 (the direction of the arrow 26 in Fig. 17). The CPU 6b acquires, for example, the standard scrolling speed "2" and the cluster layer level "2" from the user's scrolling operation input. Based on the standard scrolling speed "2" and the cluster layer level "2", the CPU 6b scrolls, from left to right, the thumbnail sequence for the photographic image data group 22a in the first row by cluster at the time cluster layer "2" corresponding to the condition "time".

Next, suppose the user performs a scrolling operation to scroll, from right to left, the thumbnail sequence for the photographic image data group 22c in the third row of the thumbnail display area 22 (the direction of the arrow 27 in Fig. 17). The CPU 6b acquires, for example, the standard scrolling speed "1" and the cluster layer level "2" from the user's scrolling operation input. Based on the standard scrolling speed "1" and the cluster layer level "2", the CPU 6b scrolls, from right to left, the thumbnail sequence for the photographic image data group 22c in the third row by cluster at the color cluster layer "2" corresponding to the condition "color", while continuing to scroll to the right the thumbnail sequence for the photographic image data group 22a in the first row.

When the user has not performed a scrolling operation on the photographic image data group 22b in the second row of the thumbnail display area 22, the thumbnail sequence for the second photographic image data group 22b remains still.

Note that, when the user performs a scrolling operation on the photographic image data group 22b in the second row of the thumbnail display area 22, the CPU 6b scrolls the thumbnail sequence for the photographic image data group 22b in the second row by cluster at the location cluster layer, corresponding to the condition "location". In this case, the user can view changes in clusters for the same folder "album 1 A01" simultaneously under differing conditions, "time" and "location".

In embodiment 3, the user can enjoy a panoramic view of changes in multiple groups of photographic image data. Furthermore, the user can simultaneously view changes in the same group of photographic image data under differing conditions. Accordingly, it is easier for the user to recognize the difference between pieces of photographic image data. This also makes viewing photographic image data and searching for a desired image easier and more efficient.

Note that, for example, if the photographic image data group 22a and the photographic image data group 22b are data for the same folder, and if the display of photographic image data for a first photographic image data group (for example, the photographic image data group 22a) is further along than the display of photographic image data for a second photographic image data group (for example, the photographic image data group 22b), then the scrolling speed of the second photographic image data group may be increased so as to catch up with the first display.

### «Embodiment 4»

Embodiment 4 of the present invention is described below with reference to the drawings. Note that in embodiment 4, constituent elements that are substantially the same as embodiment 1 bear the same labels. An explanation of these elements is omitted here, since the explanation thereof in embodiment 1 applies.

The data display device 1c in embodiment 4 adds, to the data display device 1 in embodiment 1, a function to display on the display unit 4 attribute information for a cluster that includes photographic image data corresponding to displayed thumbnails.

### <Device Configuration>

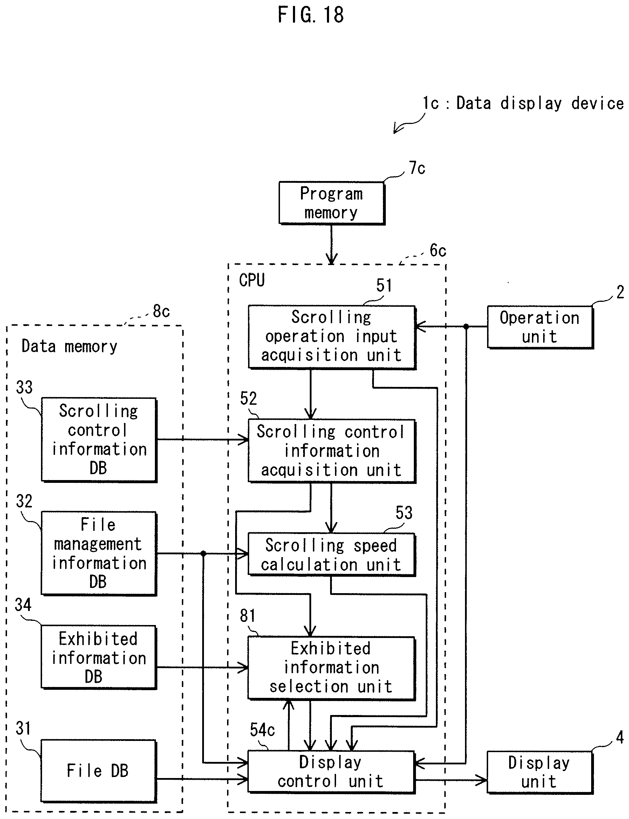

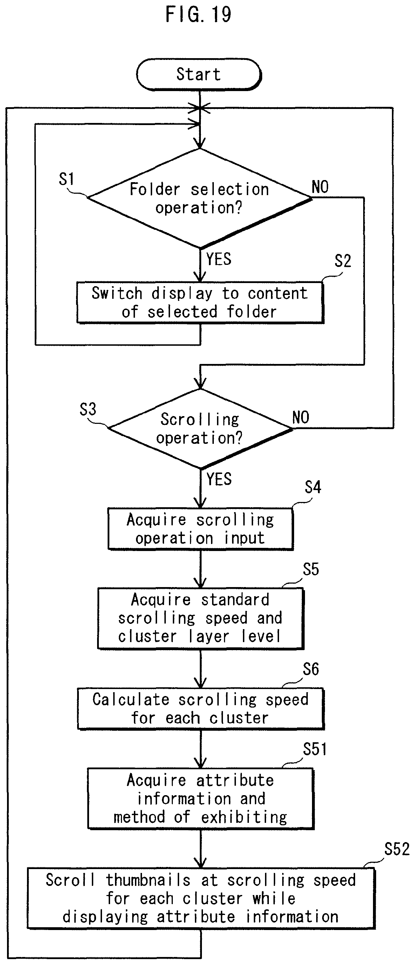

Fig. 18 is a functional block diagram of a data display device 1c according to embodiment 4. The CPU 6c performs, for example, the display control processing shown in the operation flow in Fig. 19. The program memory 7c stores, for example, a viewer application program describing the procedures shown in the operation flow in Fig. 19. The data memory 8c stores, for example, a file DB 31, file management information DB 32, scrolling control information DB 33, and exhibited information database 34.

### <Content of Exhibited Information Database in the Data Memory>

The exhibited information database (hereinafter "exhibited information DB") 34 is a database for storing the method of exhibiting attribute information for the cluster displayed in the display unit 4. In the exhibited information DB 34, attribute information and a method of exhibiting the attribute information for a cluster displayed in the display unit 4 are associated with a standard scrolling speed.

### <Functional Configuration of CPU>

From the program memory 7c, the CPU 6c reads a viewer application program that describes the procedures shown in the operation flow in Fig. 19 and executes the viewer application program that has been read. The CPU 6c thereby functions as a scrolling operation input acquisition unit 51, scrolling control information acquisition unit 52, scrolling speed calculation unit 53, exhibited information selection unit 81, and display control unit 54c.

The standard scrolling speed is input from the scrolling control information acquisition unit 52 into the exhibited information selection unit 81. The exhibited information selection unit 81 refers to the exhibited information DB 34 to acquire the attribute information and a method of exhibiting the attribute information corresponding to the standard scrolling speed for a cluster, subsequently outputting the acquired attribute information and method of exhibiting the attribute information for a cluster to the display control unit 54c.

In addition to the functions of the display control unit 54, the display control unit 54c refers to the file management information DB 32 and, in accordance with the attribute information and method of exhibiting the attribute information for a cluster as indicated by the exhibited information input from the exhibited information selection unit 81, displays attribute information for a cluster that includes photographic image data corresponding to displayed thumbnails.

### <Operation of the CPU>

Fig. 19 is a flowchart showing the flow of display control processing by the CPU 6c in Fig. 18. Note that the user selects a folder or performs a scrolling operation on the touch panel provided above the display screen of the display unit 4 in order, for example, to peruse photographic image data, to search for a desired piece of photographic image data, to change the scrolling speed, etc.

The display control unit 54c, scrolling operation input acquisition unit 51, scrolling control information acquisition unit 52, and scrolling speed calculation unit 53 perform substantially the same processing as in steps S1-S6 of Fig. 8. The exhibited information selection unit 81 refers to the data recorded in the exhibited information DB 34 to acquire the attribute information and method of exhibiting the attribute information corresponding to the standard scrolling speed acquired in step S5 for a cluster (step S51). Also, the display control unit 54c scrolls, on the display unit 4, the thumbnail sequence for the photographic image data in the user selected folder while displaying, on the display unit 4, the attribute information for the cluster that includes photographic image data corresponding to the thumbnails displayed on the display unit 4, in accordance with the attribute information and method of exhibiting the attribute information for the cluster (step S52). The thumbnail sequence is scrolled in the scrolling direction acquired in step S4 and at the scrolling speed for each cluster calculated in step S6.

### <Example of Controlling Exhibition of Attribute Information>

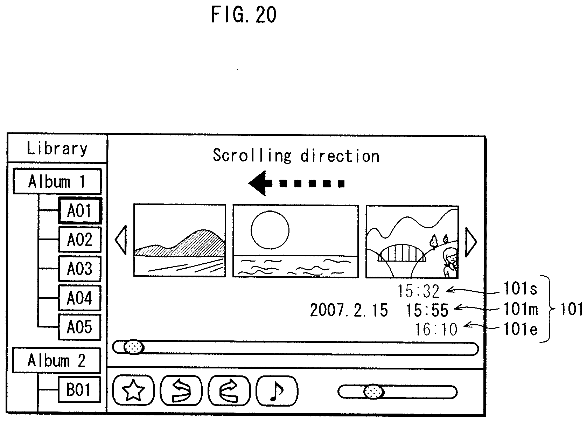

With reference to Fig. 20, the following describes an example of the CPU 6c in Fig. 18 controlling exhibition of attribute information for a cluster. Fig. 20 shows an example of a screen displayed by the display unit 4 in Fig. 18. Note that in Fig. 20, the thumbnail sequence for the photographic image data is scrolled from right to left.

In this example, the exhibited information selection unit 81 selects, as the attribute information exhibited for the cluster, the time of photography for the piece of photographic image data whose thumbnail is displayed in the center of the thumbnail display area in the display unit 4 (hereinafter "displayed piece of photographic image data"), the time of photography for the piece of photographic image data at the top of the cluster that includes the displayed piece of photographic image data (hereinafter "top piece of photographic image data"), and the time of photography for the last piece of photographic image data in the cluster that includes the displayed piece of photographic image data (hereinafter "last piece of photographic image data"). The exhibited information selection unit 81 selects, as a method of exhibiting the attribute information, to display the time of photography for the displayed piece of photographic image data in black characters and to display, respectively above and below the displayed piece of photographic image data, the times of photography for the top piece of photographic image data and the last piece of photographic image data in gray characters.

The display control unit 54c refers to the file management information DB 32 to acquire the information on time of photography for the displayed piece of photographic image data, top piece of photographic image data, and last piece of photographic image data. Based on the acquired information, the display control unit 54c displays attribute information 101 for the cluster including the displayed piece of photographic image data on the display unit 4. The display control unit 54c also changes the displayed attribute information 101 in conjunction with the scrolling of the thumbnail sequence.

In the screen displayed in Fig. 20, the display control unit 54c displays the time of photography for the displayed piece of photographic image data "2007.2.15 15:55" in black characters (label 101m), the time of photography for the top piece of photographic image data "15:32" in gray characters (label 101s) above label 101m, and the time of photography for the last piece of photographic image data "16:10" in gray characters (label 101e) below label 101m.

While photographic image data in the same cluster is displayed on the display unit 4 during scrolling of the thumbnail sequence, the display control unit 54c changes the display time 101m in conjunction with the time of photography of the piece of photographic image data whose thumbnail is displayed in the center of the thumbnail display area of the display unit 4 while not changing the display times 101s and 101e.

When the cluster that includes the piece of photographic image data whose thumbnail is displayed in the center of the thumbnail display area of the display unit 4 changes during scrolling of the thumbnail sequence, the display control unit 54c changes the display time 101m in conjunction with the time of photography of the piece of photographic image data whose thumbnail is displayed in the center of the thumbnail display area of the display unit 4. At the same time, the display control unit 54c changes the display times 101s and 101e respectively in conjunction with the times of photography of the top piece of photographic image data and last piece of photographic image data in the cluster that includes the piece of photographic image data whose thumbnail is displayed in the center of the thumbnail display area of the display unit 4.

Note that when the scrolling speed of the thumbnail sequence is fast, then for example the dates of photography of the center piece of photographic image data, top piece of photographic image data, and last piece of photographic image data can be displayed as the exhibited attribute information for a cluster. Note that the same method for exhibiting the attribute information as the above method for the time of photography may be used.

In embodiment 4, the user can simultaneously and visually view changes in attribute information for the cluster that includes the pieces of photographic image data for the thumbnail sequence being scrolled. Therefore, the user can more easily achieve an understanding of a grouping of photographic image data. This also makes viewing photographic image data and searching for a desired image easier and more efficient.

### «Supplementary Remarks»

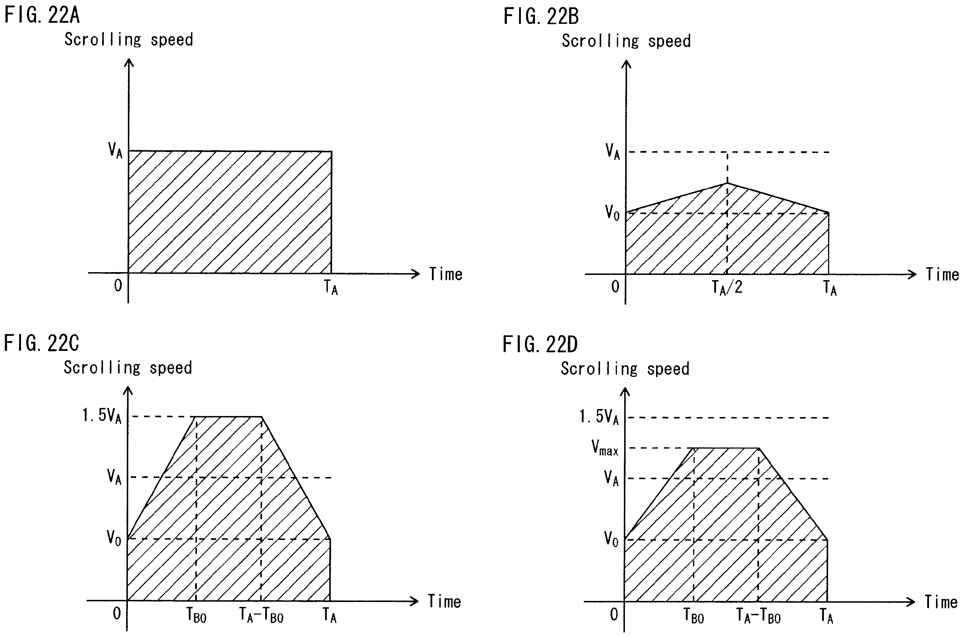

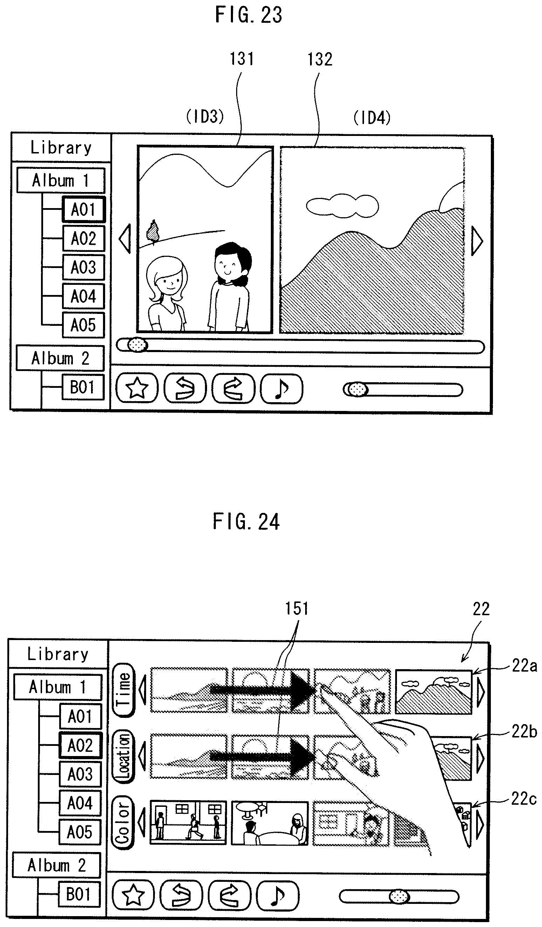

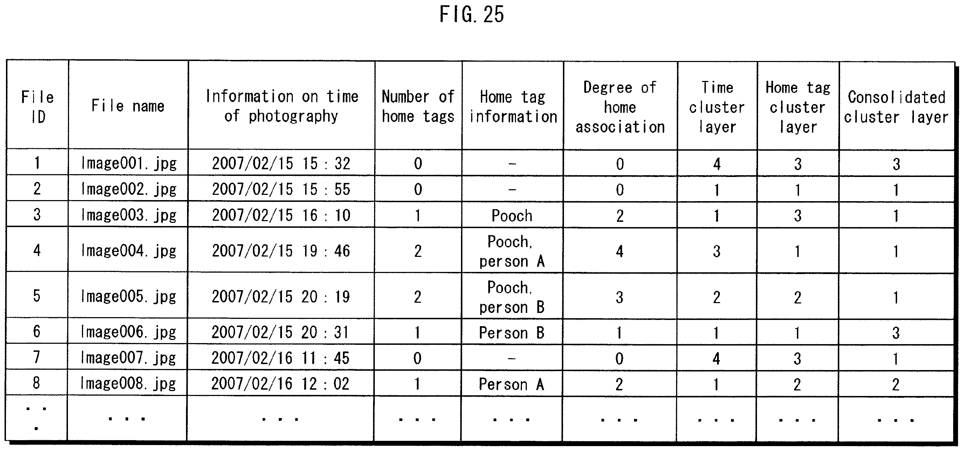

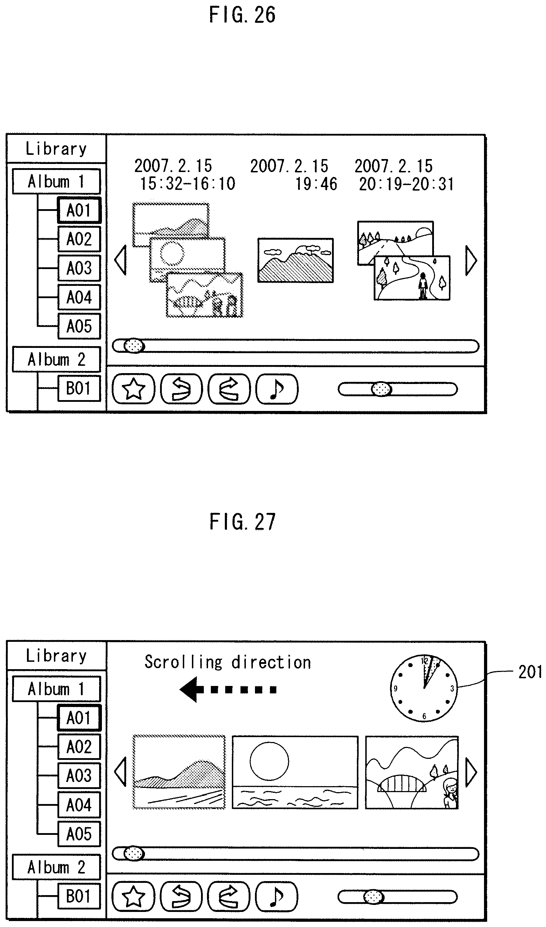

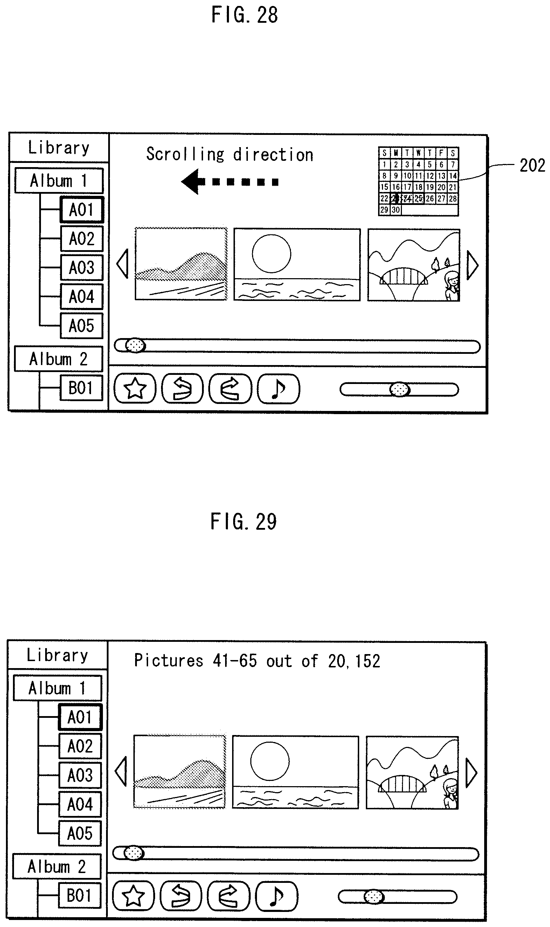

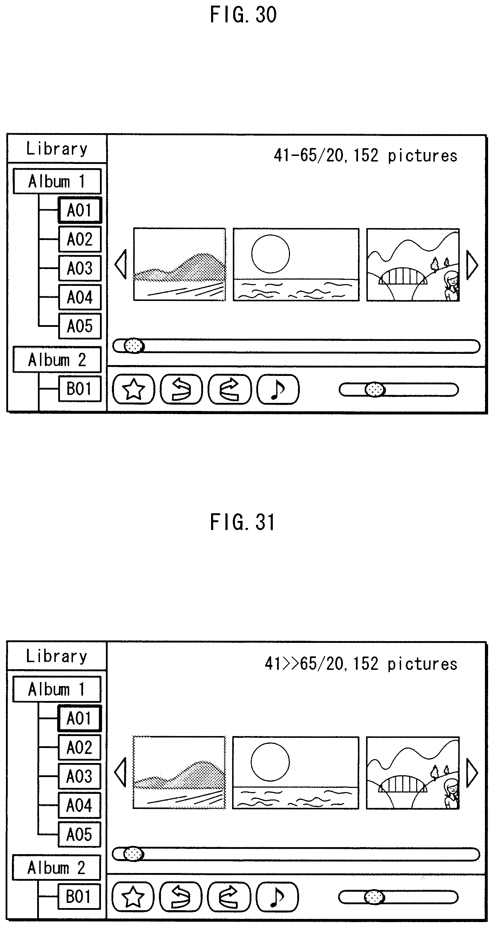

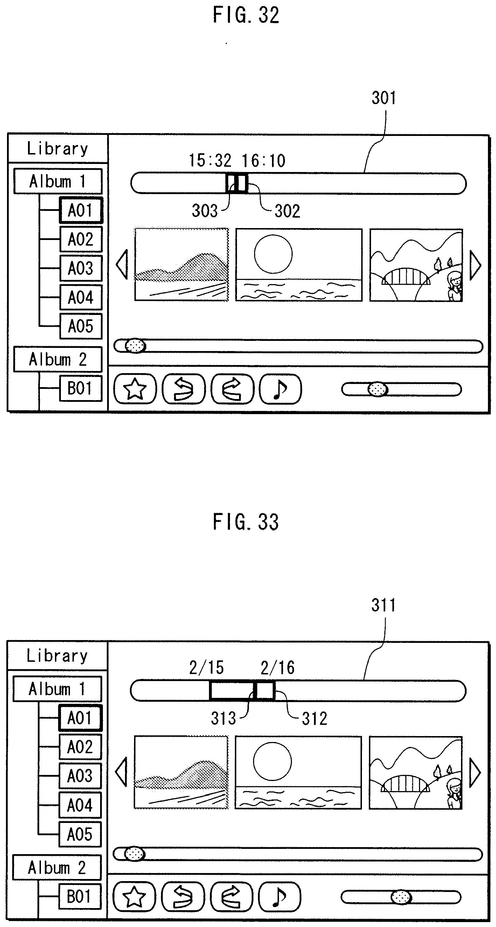

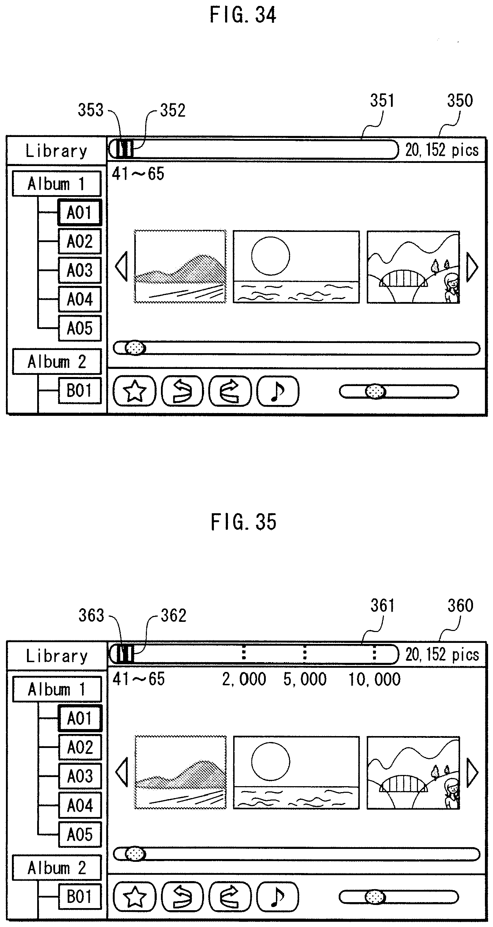

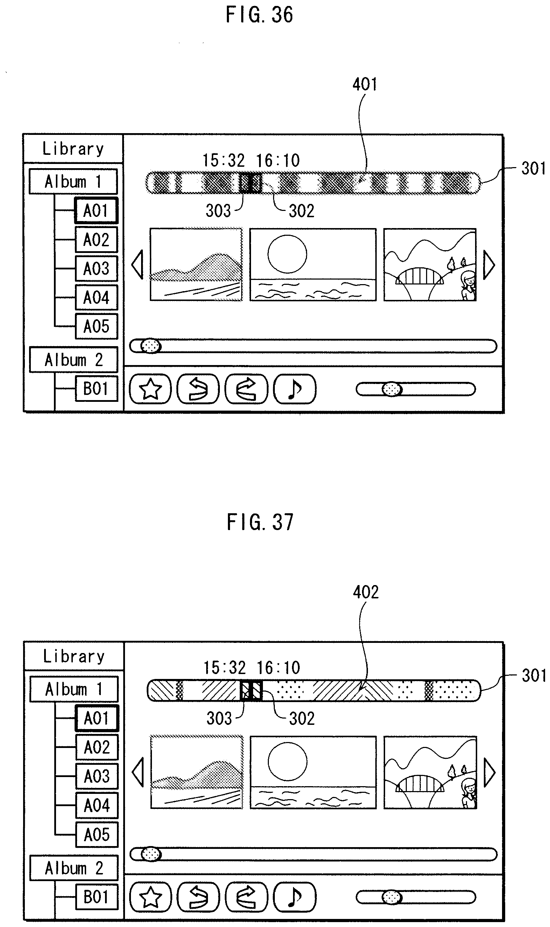

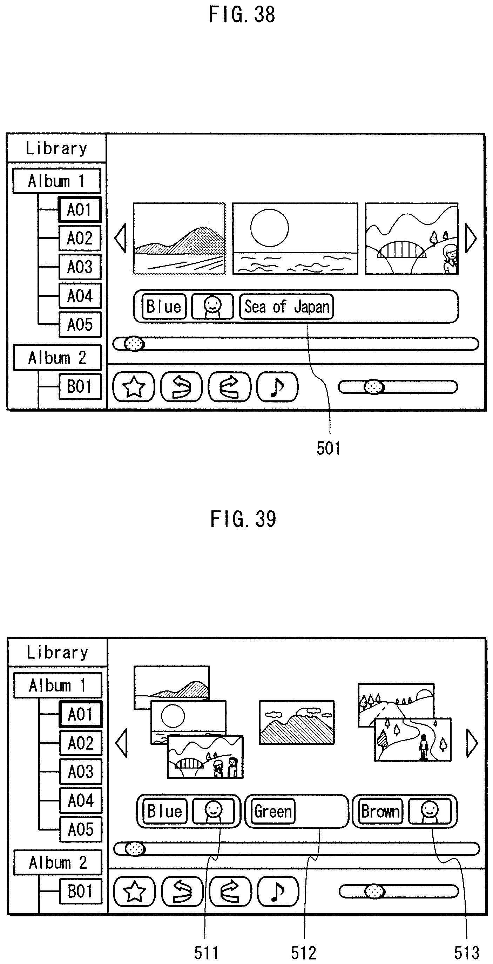

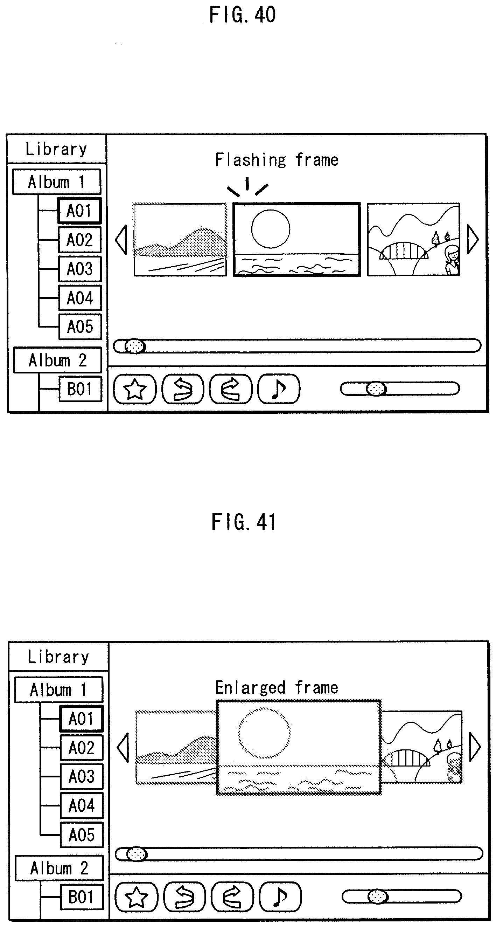

The present invention is not limited to the above embodiments, but may be embodied in any form that achieves an object related to or associated with the object of the present invention. The present invention may, for example, take the following forms.
(1) In each of the embodiments, the file data is photographic image data, yet the file data is not limited in this way and may constitute various types of file data, such as dynamic image data, audio data, etc.
(2) In embodiment 1, there are four cluster layers, but the number of cluster layers is not limited to four. The number may be two, three, or five or more. Alternatively, multiple cluster layers need not be created. Note that the same is true for other embodiments as well.
(3) In each of the embodiments, the scrolling direction was either left or right, but the scrolling direction is not limited to these directions and may also be up or down.
(4) In each of the embodiments, the user performs a scrolling operation using the touch panel provided above the display screen, the scrolling operation input acquisition unit 51 acquires the scrolling operation input (scrolling direction, operation distance, and operation acceleration) for a scrolling operation on the touch panel, and using the operation distance and operation acceleration, the scrolling control information acquisition unit 52 refers to the scrolling control information DB 33 to acquire the standard scrolling speed and the cluster layer level. The present invention is not limited in this way, however, and may for example operate as follows.
   For example, when the user performs a scrolling operation by pressing a button, such as a cross-shaped button, the scrolling operation input acquisition unit acquires the scrolling direction from the direction in which the cross-shaped button was pressed and acquires the number of times or the length of time the button was pressed. The scrolling operation input acquisition unit associates the number of times or the length of time the button was pressed with a standard scrolling speed and a cluster layer level and stores these in a database. The scrolling control information acquisition unit refers to this database to acquire the standard scrolling speed and a cluster layer level, using the number of times or the length of time the button was pressed. Note that the scrolling direction may be designated by having the user move, in the scrolling direction, the frame surrounding a thumbnail for a selected piece of photographic image data, for example.
   Also, an operation device that includes a triaxial acceleration sensor may be adapted to each of the embodiments.
(5) The data display device in each of the embodiments may include a function to measure the distance from the display unit 4 to the user (audio-visual (AV) distance) and adjust the upper and lower limits of the scrolling speed based on the screen size and the AV distance. This function can be achieved, for example, by storing the relationships between screen size, AV distance, and the upper and lower limits of the scrolling speed in a database; the data display device may then refer to the database to determine the upper and lower limits of the scrolling speed from the screen size and the measured AV distance and adjust the actual scrolling speed to stay within the range of the determined upper and lower limits.
(6) In each of the embodiments, the scrolled photographic image data group is selected using the folders in the album library, but selection is not limited in this way and may be performed by, for example, searching based on a keyword, amount of a characteristic, etc.
(7) In each of the embodiments, the standard cluster speed and the cluster layer level are determined from both the operation distance and operation acceleration, but determination is not limited in this way. For example, the standard cluster speed and the cluster layer level may be determined only from either the standard cluster speed or the cluster layer level.
(8) In each of the embodiments, the standard scrolling speed is determined using the scrolling control information DB 33, but determination is not limited in this way. For example, a predetermined formula may be used. Letting the operation distance be x (dots), the operation acceleration be y (dots/msec²) and the standard scrolling speed be z (dots/msec), then the standard scrolling speed may be calculated via z = (x-1) + 0.5y. Note that the cluster layer level may be acquired via a method other than using the scrolling control information DB 33, such as calculating the cluster layer level using a predetermined formula.
(9) In embodiments 1, 3, and 4, the data display devices 1, 1b, and 1c adopt the same cluster display time T_{A} for each cluster, but the present invention is not limited in this way. For example, the cluster display time T_{A} may differ for each cluster.
(10) In embodiments 1, 3, and 4, the data display devices 1, 1b, and 1c adopt a fixed scrolling speed within a cluster, but the present invention is not limited in this way. For example, variable control of scrolling speed may be adopted, whereby the scrolling speed is variable within a cluster.
   For example, in order to implement variable control of scrolling speed within a cluster, the scrolling speed calculation unit may include, in addition to the functions of the scrolling speed calculation unit 53, a function to calculate the scrolling speed within a cluster, with reference to the scrolling speed V_{A} for each cluster, so that the scrolling speed during either or both the beginning and the end of a cluster display period is slower than the scrolling speed during the middle of the display period.

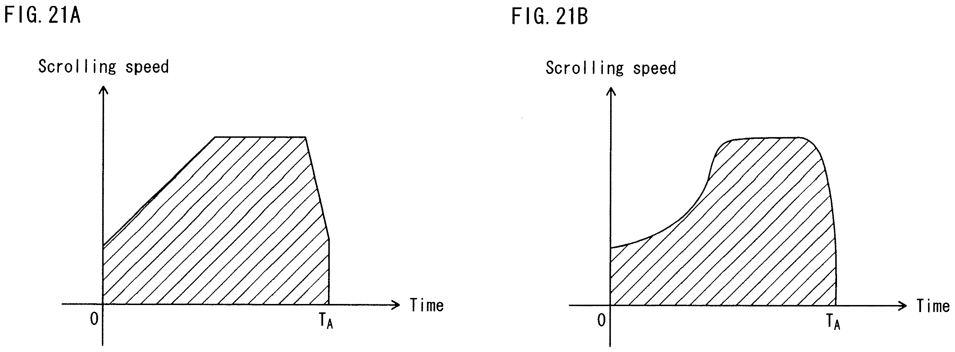

   Figs. 21 A and 21B are provided as an example of variable control of the scrolling speed within a cluster. Figs. 21A and 21B show the scrolling speed within one cluster. Fig. 21A is an example of variable control in which the scrolling speed for the beginning and the end of a cluster display period is changed along a line representing a direct function, whereas Fig. 21B is an example of variable control in which the scrolling speed for the beginning and the end of a cluster display period is changed along a line representing a quadratic function. Note that it is preferable that the scrolling speed for either or both the beginning and the end of a cluster display period be a speed at which the user can achieve some degree of understanding of the thumbnails. This has the advantage of making it easier for the user to understand the data in a cluster. It is also preferable that a sudden change in scrolling speed not occur between adjacent clusters. This has the advantage of preventing an unnatural change in the display.
   Note that a variety of modifications to variable control of scrolling speed within a cluster are possible, such as making the scrolling speed during the middle of the display period slower than the scrolling speed during the beginning and the end of the cluster display period.
   The following describes an example of variable control of scrolling speed within in a cluster with reference to Figs. 22A-22D. Figs. 22A-22D show the scrolling speed within one cluster. Note that in Fig. 22A, the scrolling speed is maintained constant within a single cluster.
   The scrolling speed calculation unit performs the same processing as the scrolling speed calculation unit 53 to calculate the cluster display time T_{A} for one cluster and the scrolling speed V_{A} for a particular cluster.
   In this example, the scrolling speed at the beginning and the end of a cluster display period is V₀, the accelerations during the beginning section and the end section of a cluster display period are respectively "a" and "-a", the ultimate scrolling speed is 1.5V_{A}, the time to arrive at 1.5V_{A} in the beginning section is T_{B0}, and the starting time of the end section is T_{B1}. Furthermore, the maximum accelerations for the beginning section and the end section are respectively aₘₐₓ and -aₘₐₓ, and the maximum scrolling speed is Vₘₐₓ.
   The scrolling speed calculation unit calculates V₀ + aₘₐₓT_{A} / 2.
   If V₀ + aₘₐₓT_{A} / 2 is equal to or less than 1.5V_{A}, the scrolling speed calculation unit sets the scrolling speed to V₀ + aₘₐₓt until the time T_{A} / 2 and sets the scrolling speed to V₀ + aₘₐₓT_{A} / 2 - aₘₐₓ(t - T_{A} / 2) after the time T_{A} / 2 (see Fig. 22B).
   If V₀ + aₘₐₓT_{A} / 2 is greater than 1.5V_{A}, and if 1.5V_{A} is equal to or less than Vₘₐₓ, the scrolling speed calculation unit variably controls the scrolling speed within the cluster so that the shaded area in Fig. 22A and the shaded area in Fig. 22C are equal. The scrolling speed calculation unit sets the scrolling speed to V₀ + 2(1.5V_{A} - V₀)²t / (V_{A}T_{A}) until time T_{B0}, to 1.5V_{A} from time T_{B0} until time T_{B1} (= T_{A} - T_{B0}), and to 1.5V_{A} - 2(1.5V_{A} - V₀)²(t - T_{A} + T_{B0}) / (V_{A}T_{A}) after time T_{B1} (= T_{A} - T_{B0}) (see Fig. 22C).
   If 1.5V_{A} is equal to or greater than Vₘₐₓ, the scrolling speed calculation unit sets the scrolling speed to V₀ + aₘₐₓt until time (Vₘₐₓ - V₀) / aₘₐₓ, to Vₘₐₓ from time (Vₘₐₓ - V₀) / aₘₐₓ to time T_{A} - (Vₘₐₓ - V₀) / aₘₐₓ, and to Vₘₐₓ - aₘₐₓ(t - T_{A}+ (Vₘₐₓ - V₀) / aₘₐₓ) after time T_{A} - (Vₘₐₓ - V₀) / aₘₐₓ (see Fig. 22D).
   Note that in Figs. 22B and 22D, not all the thumbnails for the photographic image data in the cluster can be displayed. Therefore, the step may be taken, for example, of scrolling thumbnails while intermittently skipping photographic image data around the center of the cluster.
(11) A function to produce sound effects or change background music in accordance with changes in the cluster being displayed may be added to the data display device in each of the embodiments. This makes it possible for the user to recognize changes in a cluster aurally as well as visually, thus making it easier for the user to perceive the changes in a cluster.
(12) The data display device 1a in embodiment 2 changes the displayed cluster by changing the layout of thumbnails for photographic image data in the cluster. The data display device is not limited in this way, however, and may represent changes in a displayed cluster as follows.
   The data display device may set the color of the display frame around thumbnails, or the display background color for thumbnails, to be the same for all of the photographic image data in a cluster. The data display device may then display scrolled thumbnails so that the color of the display frame around thumbnails, or the display background color for thumbnails, differs between adjacently displayed clusters.
   This example is described with reference to Fig. 23. In the cluster layers in Figs. 5 and 6, when the cluster layer level is "2", the piece of photographic image data for ID3 and the piece of photographic image data for ID4 are in separate clusters. Therefore, the data display device displays the display frame 131 around the thumbnail for the piece of photographic image data for ID3 in dark gray and displays the display frame 132 around the thumbnail for the piece of photographic image data for ID4 in light gray. In this case, since the pieces of photographic image data for ID1-ID3 belong to the same cluster, the display frames around the thumbnails for the pieces of photographic image data for ID1-ID3 are all dark gray.
   Note that instead of representing the difference in color of the display frame around thumbnails, or the display background color for thumbnails, as a contrast between dark and light, this difference may be represented in black, red, etc.
   In the above case, the data display device determines the color of the display frame around thumbnails, or the display background color for thumbnails, in each cluster in accordance with the number of pieces of photographic image data in the cluster. For example, the color of the display frame around thumbnails, or the display background color for thumbnails, may be made darker as the number of pieces of photographic image data grows larger, whereas the color may be made lighter as the number of pieces of photographic image data grows smaller. By changing the color in this way, the user can recognize not only a change in the cluster being displayed on the display unit 4 but can also recognize changes in cluster attribute information. Note that any type of cluster attribute information may be used, such as representative color, brightness, photography conditions, weather at time of photography, etc. for a photographic image.
   Furthermore, the data display device may scroll a thumbnail sequence while both changing the layout of thumbnails and changing the color of the display frame around thumbnails or the display background color for thumbnails.
(13) In embodiment 3, instead of a method for variable control of scrolling speed by cluster, the method described in embodiment 2 or in supplementary remark (12) may be adapted.
(14) In embodiment 3, the user performs scrolling operations one row at a time on the photographic image data groups 22a-22c in the thumbnail display area 22 of the display unit 4. The present invention is not limited this way, however, and for example a multi-touch panel may be provided on the display screen of the display unit 4 for the user to perform scrolling operations simultaneously on two or more groups among the photographic image data groups 22a-22c.
   One such example is described with reference to Fig. 24. In Fig. 24, the user simultaneously performs a scrolling operation with his index finger to scroll, from left to right, the photographic image data group 22a in the first row of the thumbnail display area 22 and a scrolling operation with his thumb to scroll, from left to right, the photographic image data group 22b in the second row (i.e. the direction of the arrows 151 in Fig. 24). The data display device both scrolls the thumbnail sequence in the photographic image data group in the first row based on the time cluster layer, corresponding to the condition "time", while also scrolling the thumbnail sequence in the photographic image data group in the second row based on the location cluster layer, corresponding to the condition "location".
   Suppose for example that, when the photographic image data groups 22a and 22b in Fig. 24 are the same photographic image data groups in the same folder, and when the same photographic image data is displayed in the thumbnail display area 22, the user performs the same scrolling operation on two rows simultaneously from a position corresponding to the same piece of photographic image data. In this case, the user can simultaneously view changes in grouping by time and grouping by location for the same photographic image data group. Accordingly, the user can recognize changes in grouping of photographic image data while distinguishing between a grouping with few changes in time and frequent changes in location, a grouping with frequent changes in time and few changes in location, and a grouping with frequent changes in both time and location.
   Note that the data display device may include a function to switch the condition and photographic image data group between the first row and the second row in the display on the display unit 4 when, for example, the user places his index finger on the first row in the thumbnail display area 22, places his thumb on the second row, and crosses his index finger and thumb.
(15) The data display device 1b in embodiment 3 refers to the file management information DB 32b in Fig. 15, but the data display device 1b is not limited in this way and may, for example, use the file management information DB of which an example is shown in Fig. 25.
   In the file management information DB in Fig. 25, for each piece of photographic image data, a file ID is associated with the following: a file name for the piece of photographic image data, information on time of photography indicating when the photographic image was captured, number of home tags, home tag information, degree of home association, time cluster layer, home tag cluster layer, and consolidated cluster layer.
   The number of home tags is information indicating the number of home tags, the home tag information indicates the type of home tag (e.g. pooch, person A), and the degree of home association is information indicating the degree of association with the home for the piece of photographic image data. Note that the degree of association with the home for a piece of photographic image data is calculated, for example, by first calculating the degree of association for each home tag based on an analysis of all of the photographs in the home to determine which home tags are strongly associated with the home. The degrees of association for each of the home tags indicated by the home tag information for a piece of photographic image data are then totaled.
   The time cluster layer is a group of photographic image data resulting from dividing photographic image data based on the distance between the times at which photographic images were captured. The home tag cluster layer is a group of photographic image data resulting from dividing photographic image data based on the distance between the degrees of home association in photographic images. The consolidated cluster layer is a group of photographic image data that takes both the time cluster and the home tag cluster into consideration by consolidating these clusters.
   In Fig. 25, the time cluster layer, home tag cluster layer, and consolidated cluster layer corresponding to each piece of photographic image data indicate the highest of the cluster layers in which the piece of photographic information is the top piece in the cluster.
   Note that the following condition selection buttons are displayed: "time", corresponding to the time cluster layer, "home", corresponding to the home tag cluster layer, and "consolidated", corresponding to the consolidated cluster layer.
   The attribute information of photographic image data may be information other than information on time of photography, information on location of photography, color information, people information, number of home tags, home tag information, and degree of home association. Also, the cluster layers may be cluster layers other than the time cluster layer, location cluster layer, color cluster layer, people cluster layer, home tag cluster layer, and consolidated cluster layer.
(16) In embodiment 4, an exhibited information DB 34, which associates a standard scrolling speed with attribute information for the cluster displayed in the display unit 4 and the method of exhibiting the attribute information, is prepared. The exhibited information selection unit 81 refers to this exhibited information DB 34 to select the attribute information and method of exhibiting the attribute information corresponding to the standard scrolling speed for a cluster displayed on the display unit 4. However, the method of determining the attribute information displayed on the display unit 4 and determining the method of exhibiting the attribute information is not limited in this way. For example, information acquired from the scrolling operation by the user may be used to determine the attribute information displayed on the display unit 4 and the method of exhibiting the attribute information.
(17) In embodiment 4, a method of exhibiting attribute information for a cluster is adapted to the method of variable control of scrolling speed by cluster, but the present invention is not limited in this way. For example, a method of exhibiting attribute information for a cluster may be adapted to the method to control the layout of thumbnails by cluster as described in embodiment 2 or to the method to control the color of the display frame around thumbnails, or the display background color for thumbnails, by cluster as described in supplementary remark (12).
   An example of adapting a method of exhibiting attribute information for a cluster to a method, for example, of controlling the layout of thumbnails by cluster is described with reference to Fig. 26. The file management information DB is assumed to be as in Fig. 5, and the cluster layer level is assumed to be "2".
   The exhibited attribute information for a cluster is the time of photography for the top and last pieces of photographic image data in the cluster, and the method of exhibiting this attribute information is to position the attribute information for the cluster above the thumbnails for the photographic image data in the cluster. The data display device displays, for example, "2007.2.15 15:32-16:10" above the cluster that includes the photographic image data with file IDs "1"-"3", "2007.2.15 19:46" above the cluster that includes the photographic image data with file ID "4", and "2007.2.15 20:19-20:31" above the cluster that includes the photographic image data with file IDs "5"-"6".
(18) The exhibited attribute information for a cluster described in embodiment 4 is only an example and is not limited in this way. In order, for example, to provide an overall idea of the attributes of a cluster, the attribute information for the cluster may be attribute information for all of the photographic image data in the cluster, an average of attribute information for photographic image data in the cluster, etc.
(19) In the method of exhibiting attribute information for a cluster in embodiment 4, the time of photography, etc. for a piece of photographic image data is displayed as is on the display unit 4, but the method of exhibiting attribute information for a cluster is not limited in this way and may be as follows.
   For example, as the exhibited attribute information for a cluster, the time of photography for the piece of photographic image data whose thumbnail is displayed in the center of the thumbnail display area in the display unit 4 (displayed piece of photographic image data), the time of photography for the piece of photographic image data at the top of the cluster that includes the displayed piece of photographic image data (top piece of photographic image data), and the time of photography for the last piece of photographic image data in the cluster that includes the displayed piece of photographic image data (last piece of photographic image data) are used. Also, the clock 201 shown in Fig. 27 is used as the method of exhibiting the attribute information for a cluster. The data display device indicates the time of photography of a displayed piece of photographic image data with the hand of the clock and shades the range from the time of photography of the top piece of photographic image data to the time of photography of the last piece of photographic image data.
   Alternatively, the dates of photography of the top piece of photographic image data and last piece of photographic image data can be used as the exhibited attribute information for a cluster. The calendar 202 shown in Fig. 28 may also be used as the method of exhibiting attribute information for a cluster. The data display device shades the range from the date of photography of the top piece of photographic image data to the date of photography of the last piece of photographic image data.
   Note that the method of exhibiting attribute information for a cluster in Figs. 27 and 28 may be adapted to the method to control the layout of thumbnails by cluster as described in embodiment 2 or to the method to control the color of the display frame around thumbnails, or the display background color for thumbnails, by cluster as described in supplementary remark (12).
(20) While exhibiting attribute information for a cluster that includes the piece of photographic image data displayed in the center of the thumbnail display area, the data display device may also exhibit the position of the cluster within the entire photographic image data in the folder being scrolled (hereinafter referred to as the "target folder").
   For example, as a way of positioning a cluster within the entire photographic image data in the target folder, the data display device may display on the display unit 4 the total number of pieces of photographic image data in the target folder along with information indicating the number, within the entire photographic image data in the target folder, of the top piece of photographic image data and last piece of photographic image data in the cluster that includes the displayed piece of photographic image data whose thumbnail is displayed in the center of the thumbnail display area in the display unit 4, as shown in Figs. 29, 30, and 31.
   For example, suppose there are 20,152 pieces of photographic image data in the target folder, and that the top and last pieces of photographic image data in the cluster that includes the displayed piece of photographic image data are, respectively, the 41^{st} and 65^{th} piece of photographic image data within the entire photographic image data in the target folder. In this case, the data display device displays "Pictures 41-65 out of 20,152", as shown in Fig. 29, "41-65/20,152 pictures", as shown in Fig. 30, or "41>>65/20,152 pictures", as shown in Fig. 31.
   Accordingly, the user can view or search photographic image data while recognizing the position of a cluster within the entire photographic image data in the target folder. This makes viewing photographic image data and searching for a desired image easier and more efficient.
(21) While exhibiting attribute information for a cluster that includes the piece of photographic image data displayed in the center of the thumbnail display area, the data display device may also, for example, exhibit the positions, within the entire photographic image data in the folder being scrolled (target folder), of both the cluster as well as the pieces of photographic image data being displayed.
   For example, as shown in Figs. 32 and 33, the data display device displays an entire range 301 and entire range 311 on the display screen to indicate the range of the entire photographic image data in the target folder.
   The data display device calculates the position of the cluster within the entire photographic image data in the target folder based on the times of photography of the top piece of photographic image data and last piece of photographic image data in the cluster that includes the piece of photographic image data whose thumbnail is displayed in the center of the thumbnail display area. While displaying, at a location within the entire range 301 and entire range 311 in accordance with the results of calculation, a cluster range 302 and cluster range 312 to indicate the ranges of the clusters, the data display device also displays the time or date of photography of the top and last pieces of photographic image data.
   Furthermore, the data display device calculates the position, within the entire photographic image data in the target folder, of the set of photographic image data whose thumbnails are displayed in the thumbnail display area (hereinafter "displayed set"). The data display device performs this calculation using the times of photography of the top and last pieces of photographic image data in the target folder and the times of photography of the top and last pieces of photographic image data whose thumbnails are displayed in the thumbnail display area. The data display device then displays, at positions in accordance with the results of calculation, a display range 303 and display range 313 to indicate the ranges of the displayed sets.
   Note that, for example, it is possible to use the times shown in Fig. 32 when the scrolling speed is slow and the dates shown in Fig. 33 when the scrolling speed is fast.
   As shown in Figs. 34 and 35, the data display device displays the number of pieces of photographic image data in the target folder in the number display region 350 and number display region 360. The data display device displays on the display screen an entire range 351 and entire range 361 to indicate the range of the entire photographic image data in the target folder. Note that in the example in Fig. 35, logarithmic display is used, and it is possible to use logarithmic display focusing, for example, on the piece of photographic image data being displayed.
   The data display device calculates the position of the cluster in the entire photographic image data in the target folder from the number of pieces of photographic image data in the target folder and from the number, within the entire photographic image data in the target folder, of the top piece of photographic image data and last piece of photographic image data in the cluster that includes the piece of photographic image data whose thumbnail is displayed in the center of the thumbnail display area. While displaying, at a position in the entire range 351 and entire range 361 in accordance with the results of calculation, a cluster range 352 and cluster range 362 to indicate the range of the clusters, the data display device also displays information to indicate the number, within the entire photographic image data in the target folder, of the top and last pieces of photographic image data.
   Furthermore, the data display device calculates the position of the set of photographic image data whose thumbnails are displayed in the thumbnail display area (displayed set) within the entire photographic image data in the target folder from the number of pieces of photographic image data in the target folder and from the number, within the entire photographic image data in the target folder, of the top and last pieces of photographic image data whose thumbnails are displayed in the thumbnail display area. The data display device then displays, at positions in the entire range 351 and entire range 361 in accordance with the results of calculation, a display range 353 and display range 363 to indicate the range of the displayed set.
   Accordingly, the user can view or search photographic image data while recognizing the location of a cluster within the entire photographic image data in the target folder and the position of a displayed set of photographic image data. This makes viewing photographic image data and searching for a desired image easier and more efficient.
   Note that, while the data display device displays the position of a cluster within the entire photographic image data in the folder being scrolled, the data display device may instead, for example, calculate the granularity of a cluster from the attribute information for the photographic image data in the cluster and display the cluster granularity on the display unit 4.
(22) While exhibiting, for example, (i) attribute information for a cluster that includes the piece of photographic image data displayed in the center of the thumbnail display area and (ii) the position of the cluster and the position of the piece of photographic image data being displayed within the entire photographic image data in the folder being scrolled (target folder), the data display device may also exhibit statistical information on the photographic image data in the target folder.
   One such example is described with reference to Fig. 36. The statistical information in Fig. 36 represents the approximate density corresponding to the time of photography of the photographic image data within the target folder. In the entire range 301 described with reference to Fig. 32, the data display device displays approximate densities 401, corresponding to the number of pieces of photographic image data captured within a predetermined interval. The data display device uses, for example, the information on time of photography for each piece of photographic image data in the target folder to calculate the density of photographic image data in a predetermined interval from the number of pieces of photographic image data captured in the predetermined interval. Based on the results of calculation, the data display device then shades the entire range 301 so that higher densities are displayed more darkly.
   Another example is described with reference to Fig. 37. In Fig. 37, the statistical information represents the color of the photographic image data in the target folder. In the entire range 301 described with reference to Fig. 32, the data display device displays changes in color 402 in the photographic images in the photographic image data. The data display device for example calculates the average color for the photographic images in the photographic image data or extracts a representative color with the largest area when, for example, the colors included in the photographic images are converted to 32 colors. The data display device then displays the average colors or representative colors in the entire range 301.
   Note that when the cluster level is changed via a scrolling operation, the densities may be calculated again after changing the predetermined interval used for density calculation, or the representative colors may be extracted again.
   With this configuration, the user can view or search photographic image data while viewing changes in statistical information for the entire photographic image data in the target folder. This makes viewing photographic image data and searching for a desired image easier and more efficient.
(23) The data display device may exhibit statistical information or representative information on, for example, the cluster that includes the piece of photographic image data displayed in the center of the thumbnail display area.
   For example, as shown in Figs. 38 and 39, the data display device displays information display areas 501 and 511-513 for each cluster that includes pieces of photographic image data displayed in the thumbnail display area. The data display device analyzes the pieces of photographic image data in each cluster and, based on the results of analysis, summarizes statistical data or the amount of characteristics, for example, in the attribute information for the pieces of photographic image data in the cluster. The data display device then displays the summary as the information display areas 501 and 511-513.
   In the example in Fig. 38, the data display device displays, in the information display area 501, the representative color for the entire photographic image data in the cluster, "blue"; a facial thumbnail image of the representative person photographed in the photographic image data in the cluster; and the representative photographic location for the photographic image data in the cluster, "Sea of Japan".
   Note that displaying characters, icons, thumbnails, etc. are ways of displaying the information in the cluster information display areas 501 and 511-513. Any method, however, that allows audio-visual recognition of statistical or representative information on a cluster may be used.
   With this configuration, the user can view or search photographic image data while viewing changes in statistical or representative information for a cluster. This makes viewing photographic image data and searching for a desired image easier and more efficient.
(24) The data display device may search the photographic image data in a cluster for a representative piece of photographic image data that shares information with many other pieces of photographic image data and emphasize, on the display unit 4, the display of the representative piece of photographic image data found during the search. Possible methods of emphasis include, for example, making the frame around the representative piece of photographic image data flash, as in Fig. 40, or interrupting scrolling for a predetermined time and enlarging the display of the thumbnail for the representative piece of photographic image data, as in Fig. 41. Note that a representative piece of photographic image data could be, for example, a piece of photographic image data that includes a person or object often appearing in photographic images in the photographic image data.
(25) The data display device may display, on the display unit 4, a list of part or all of the attribute information for photographic image data in the folder being scrolled (target folder) or may display, on the display unit 4, a list of part or all of the attribute information for the photographic image data in the cluster that includes the piece of photographic image data whose thumbnail is displayed in the center of the thumbnail display area.
(26) Embodiment 4 and its modifications exhibit attribute information for the cluster that includes the piece of photographic image data whose thumbnail is displayed in the center of the thumbnail display area, yet the present invention is not limited in this way. For example, the data display device may display, on the display unit 4, all of the attribute information for the cluster that includes pieces of photographic image data whose thumbnails are displayed in the thumbnail display area.
(27) Each of the devices in the embodiments is not limited to a software configuration operating on a CPU or MPU but may also be implemented via a hardware configuration. In this case, the devices are typically implemented on a large scale integration (LSI), a type of integrated circuit. Each device may be on a separate chip, or all or a portion of the device may be included on one chip. A system LSI is referred to above, but according to its degree of integration, it may be called an IC, system LSI, super LSI, or ultra LSI. The method for integrating the circuit is not limited to LSI, but can also be implemented via a dedicated circuit or a generic processor. A field programmable gate array (FPGA) which can be programmed after production of the LSI, or a reconfigurable processor in which the connections and settings of the circuit cells in the LSI can be reconfigured, could also be used. Furthermore, if integrated circuit technology that replaces LSIs appears via advances in semiconductor technology or the emergence of other technology, then of course the function block can be integrated using that technology. The application of biotechnology or other technology is possible.
(28) The viewer application program and the like described in the embodiments and modifications may be stored on a computer readable recording medium, and the recording medium may be distributed.

### [Industrial Applicability]

The present invention is applicable to technology to control display of a large amount of file data on, for example, a mobile audio-visual terminal, DVD recorder, television, personal computer, etc.

### [Reference Signs List]

- 1, 1a, 1b, 1c: data display device
- 2: operation unit
- 3: data input unit
- 4: display unit
- 5: input/output interface unit (I/O interface unit)
- 6, 6a, 6b, 6c: CPU
- 7, 7a, 7b, 7c: program memory
- 8, 8b, 8c: data memory
- 31: file database (file DB)
- 32, 32b: file management information database (file management information DB)
- 33: scrolling control information database (scrolling control information DB)
- 34: exhibited information database (exhibited information database DB)
- 51: scrolling operation input acquisition unit
- 52: scrolling control information acquisition unit
- 53, 53b: scrolling speed calculation unit
- 54, 54a, 54b, 54c: display control unit
- 61: layout determination unit
- 81: exhibited information selection unit

## Claims

1. A data display device for displaying, on a display unit (4), a group of images related to a plurality of pieces of file data,
**characterized by**
an operation unit (2) operable to receive, from a user, a scrolling operation for switching display of the group of images related to the pieces of file data;
a storage unit (18) storing cluster information on clusters that are generated by grouping the pieces of file data according to each of a plurality of grouping conditions that can be selected via the scrolling operation; and
a control unit (6) operable to select a grouping condition in accordance with at least one of an operation distance and an operation acceleration of the scrolling operation received by the operation unit and to display, on the display unit (4), the group of images related to the pieces of file data in accordance with the cluster information stored in the storage unit for the selected grouping condition so that the user can distinguish between clusters generated according to the selected grouping condition.

2. The data display device in claim 1, wherein
the control unit (6) is operable to display by scrolling, on the display unit (4), the group of images related to the pieces of file data while controlling a scrolling speed for each cluster generated according to the selected grouping condition.

3. The data display device in claim 2, wherein
the control unit (6) is operable to calculate the scrolling speed for each cluster in accordance with a number of pieces of file data in the cluster and displays by scrolling the group of images in accordance with the scrolling speed calculated for each cluster.

4. The data display device in claim 2, wherein
the control unit (6) is operable to adopt a variable scrolling speed within a cluster and displays by scrolling the group of images.

5. The data display device in claim 4, wherein
the control unit (6) is operable to display by scrolling the group of images so that a scrolling speed during at least one of a beginning and an end of a cluster display period is slower than a scrolling speed during a middle of the cluster display period.

6. The data display device in claim 1, wherein
the control unit (6) is operable to display images related to pieces of file data in each cluster generated according to the selected grouping condition while controlling a layout position on the display unit (4) of the images in the cluster.

7. The data display device in claim 6, wherein
the control unit (6) is operable to display the images related to pieces of file data so that (i) each image related to a piece of file data in a cluster at least partially overlaps with another image in the cluster and (ii) images related to pieces of file data in different clusters do not overlap.

8. The data display device in claim 1, wherein
the control unit (6) is operable to set a display frame color or a display background color to a same color for all images related to pieces of file data in a same cluster and sets display frame colors or display background colors for adjacently displayed clusters to different colors.

9. The data display device in claim 1, wherein the data display device is operable so that the display unit (4) displays a plurality of groups of images related to the pieces of file data, the operation unit (2) further receives, from the user, a condition selection operation for each group,
the storage unit (8) further stores cluster information on clusters that are generated by grouping the pieces of file data according to each of a plurality of grouping conditions that can be selected via the condition selection operation, and
in accordance with cluster information, stored in the storage unit (8), for grouping conditions corresponding to the condition selection operations, the control unit (6) displays the group of images so that the user can distinguish between clusters generated according to the grouping conditions.

10. The data display device in claim 9, wherein the data display device is operable so that the operation unit (2) receives scrolling operations simultaneously for two or more groups, and
the control unit (6) simultaneously displays images in the two or more groups for which the scrolling operations were received simultaneously.

11. The data display device in claim 1, wherein the data display device is operable so that the storage unit (8) stores cluster information on layered clusters that are generated by grouping the pieces of file data hierarchically according to the grouping conditions, and
the control unit (6) displays the group of images so that the user can distinguish between layered clusters in accordance with the scrolling operation and with the cluster information stored in the storage unit.

12. The data display device in claim 1, wherein the data display device is operable so that the control unit (6) displays, on the display unit (4), attribute information for a cluster that includes a piece of file data being displayed.

13. The data display device in claim 12, wherein the data display device is operable so that the control unit (6) displays, on the display unit (4), a location within all of the pieces of file data for the cluster that includes a piece of file data being displayed.

14. The data display device in claim 12, wherein the data display device is operable so that the control unit (6) displays, on the display unit (4), statistical information on the pieces of file data.

15. The data display device in claim 1, wherein the data display device is operable so that the control unit (6) displays, on the display unit (4), an image for a representative piece of file data, emphasizing the image.

16. A data display method used in a data display device that displays, on a display unit (4), a group of images related to a plurality of pieces of file data and that comprises a storage unit storing cluster information on clusters that are generated by grouping the pieces of file data according to each of a plurality of grouping conditions that can be selected by a scrolling operation for switching display of the group of images related to the pieces of file data, the data display method comprising:
receiving the scrolling operation from a user; and
selecting a grouping condition in accordance with at least one of an operation distance and an operation acceleration of the scrolling operation received by the operation unit and displaying, on the display unit (4), the group of images related to the pieces of file data in accordance with the cluster information stored in the storage unit for the selected grouping condition, so that the user can distinguish between clusters generated according to the selected grouping condition.

17. A data display program for a data display device that displays, on a display unit (4), a group of images related to a plurality of pieces of file data and that comprises a storage unit storing cluster information on clusters that are generated by grouping the pieces of file data according to each of a plurality of grouping conditions that can be selected by a scrolling operation for switching display of the group of images related to the pieces of file data, the data display program causing the data display device to perform:
receiving the scrolling operation from a user; and
selecting a grouping condition in accordance with at least one of an operation distance and an operation acceleration of the scrolling operation received by the operation unit and displaying, on the display unit (4), the group of images related to the pieces of file data in accordance with the cluster information stored in the storage unit for the selected grouping condition, so that the user can distinguish between clusters generated according to the selected grouping condition.

18. A recording medium on which is recorded a data display program for a data display device that displays, on a display unit (4), a group of images related to a plurality of pieces of file data and that comprises a storage unit storing cluster information on clusters that are generated by grouping the pieces of file data according to each of a plurality of grouping conditions that can be selected by a scrolling operation for switching display the group of images related to the pieces of file data, the data display program causing the data display device to perform:
receiving the scrolling operation from a user; and
selecting a grouping condition in accordance with at least one of an operation distance and an operation acceleration of the scrolling operation received by the operation unit and displaying, on the display unit (4), the group of images related to the pieces of file data in accordance with the cluster information stored in the storage unit for the selected grouping condition, so that the user can distinguish between clusters generated according to the selected grouping condition.

## Patentansprüche

1. Datenanzeigevorrichtung zum Anzeigen, auf einer Anzeigeeinheit (4), einer Gruppe von Bildern, die sich auf eine Vielzahl von Dateidatenfragmenten beziehen,
**gekennzeichnet durch**
eine Betätigungseinheit (2), die in Funktion von einem Benutzer eine Scrollbetätigung zum Umschalten der Anzeige der Gruppe von Bildern empfangen kann, die sich auf die Dateidatenfragmente beziehen;
eine Speichereinheit (18) zum Speichern von Clusterinformationen über Cluster, die durch Gruppieren der Dateidatenfragmente entsprechend jedem aus einer Vielzahl von Gruppierungsbedingungen erzeugt werden, die über die Scrollbetätigung ausgewählt werden können; und
eine Steuereinheit (6), die in Funktion eine Gruppierungsbedingung gemäß mindestens einem aus einer Betätigungsdistanz und einer Betätigungsbeschleunigung der Scrollbetätigung, die von der Betätigungseinheit empfangen wird, auswählen kann, und auf der Anzeigeeinheit (4) die Gruppe von Bildern, die sich auf die Vielzahl von Dateidatenfragmenten beziehen, entsprechend den in der Speichereinheit gespeicherten Clusterinformationen für die ausgewählte Gruppierungsbedingung anzeigen kann, so dass der Benutzer zwischen Clustern unterscheiden kann, die gemäß der ausgewählten Gruppierungsbedingung erzeugt werden.

2. Datenanzeigevorrichtung nach Anspruch 1, wobei
die Steuereinheit (6) in Funktion durch Scrollen auf der Anzeigeeinheit (4) die Gruppe von Bildern anzeigen kann, die sich auf die Dateidatenfragmente beziehen, während gleichzeitig eine Scrollgeschwindigkeit für die einzelnen Cluster gesteuert wird, die gemäß der ausgewählten Gruppierungsbedingung erzeugt werden.

3. Datenanzeigevorrichtung nach Anspruch 2, wobei
die Steuereinheit (6) in Funktion die Scrollgeschwindigkeit für die einzelnen Cluster gemäß einer Anzahl von Dateidatenfragmenten in dem Cluster berechnen kann und durch Scrollen die Gruppe von Bildern gemäß der Scrollgeschwindigkeit anzeigt, die für die einzelnen Cluster berechnet wird.

4. Datenanzeigevorrichtung nach Anspruch 2, wobei
die Steuereinheit (6) in Funktion eine variable Scrollgeschwindigkeit innerhalb eines Clusters annehmen kann und durch Scrollen die Gruppe von Bildern anzeigt.

5. Datenanzeigevorrichtung nach Anspruch 4, wobei
die Steuereinheit (6) in Funktion durch Scrollen die Gruppe von Bildern anzeigen kann, so dass eine Scrollgeschwindigkeit während mindestens einem aus einem Anfang und einem Ende einer Clusteranzeigeperiode langsamer als eine Scrollgeschwindigkeit während der Mitte der Clusteranzeigeperiode ist.

6. Datenanzeigevorrichtung nach Anspruch 1, wobei
die Steuereinheit (6) in Funktion Bilder anzeigen kann, die sich auf Dateidatenfragmente in den einzelnen Clustern beziehen, die gemäß der ausgewählten Gruppierungsbedingung erzeugt werden, während gleichzeitig eine Layoutposition auf der Anzeigeeinheit (4) der Bilder in dem Cluster gesteuert wird.

7. Datenanzeigevorrichtung nach Anspruch 6, wobei
die Steuereinheit (6) in Funktion die Bilder, die sich auf Dateidatenfragmente beziehen, so anzeigen kann, dass (i) jedes Bild, das sich auf ein Dateidatenfragment in einem Cluster bezieht, zumindest zum Teil ein anderes Bild in dem Cluster überlappt und (ii) Bilder, die sich auf Dateidatenfragmente in verschiedenen Clustern beziehen, nicht überlappen.

8. Datenanzeigevorrichtung nach Anspruch 1, wobei
die Steuereinheit (6) in Funktion eine Anzeigerahmenfarbe oder eine Anzeigehintergrundfarbe auf eine selbe Farbe für alle Bilder setzen kann, die sich auf Dateidatenfragmente in einem selben Cluster beziehen, und Anzeigerahmenfarben oder Anzeigehintergrundfarben für nebeneinander angezeigte Cluster auf verschiedene Farben setzt.

9. Datenanzeigevorrichtung nach Anspruch 1, wobei
die Datenanzeigevorrichtung so betrieben werden kann, dass die Anzeigeeinheit eine Vielzahl von Gruppen von Bildern anzeigt, die sich auf die Dateidatenfragmente beziehen,
die Betätigungseinheit (2) des Weiteren von dem Benutzer eine Bedingungsauswahlbetätigung für jede Gruppe empfängt,
die Speichereinheit (8) des Weiteren Clusterinformationen über Cluster speichert, die durch Gruppieren der Dateidatenfragmente entsprechend jedem aus einer Vielzahl von Gruppierungsbedingungen erzeugt werden, die über die Bedingungsauswahtbetätigung ausgewählt werden können, und
die Steuereinheit gemäß Clusterinformationen, die in der Speichereinheit (8) gespeichert sind, für Gruppierungsbedingungen entsprechend den Bedingungsauswahlbetätigungen die Gruppe von Bildern so anzeigt, dass der Benutzer zwischen Clustern unterscheiden kann, die gemäß den Gruppierungsbedingungen erzeugt werden.

10. Datenanzeigevorrichtung nach Anspruch 9, wobei
die Datenanzeigevorrichtung so betrieben werden kann, dass die Betätigungseinheit (2) Scrollbetätigungen gleichzeitig für zwei oder mehr Gruppen empfängt, und
die Steuereinheit (6) gleichzeitig Bilder in den zwei oder mehr Gruppen anzeigt, für die Scrollbetätigungen gleichzeitig empfangen wurden.

11. Datenanzeigevorrichtung nach Anspruch 1, wobei
die Datenanzeigevorrichtung so betrieben werden kann, dass die Speichereinheit (8) Clusterinformationen über mehrschichtige Cluster speichert, die durch Gruppieren der Dateidatenfragmente hierarchisch gemäß den Gruppierungsbedingungen erzeugt werden, und
die Steuereinheit (6) die Gruppe von Bildern so anzeigt, dass der Benutzer zwischen mehrschichtigen Clustern gemäß der Scrollbetätigung und mit den in der Speichereinheit gespeicherten Clusterinformationen unterscheiden kann.

12. Datenanzeigevorrichtung nach Anspruch 1, wobei die Datenanzeigevorrichtung so betrieben werden kann, dass die Steuereinheit (6) auf der Anzeigeeinheit (4) Attributinformationen für einen Cluster anzeigt, der ein Dateidatenfragment enthält, das angezeigt wird.

13. Datenanzeigevorrichtung nach Anspruch 12, wobei
die Datenanzeigevorrichtung so betrieben werden kann, dass die Steuereinheit (6) auf der Anzeigeeinheit (4) eine Position in allen Dateidatenfragmenten für den Cluster anzeigt, der ein Dateidatenfragment enthält, das angezeigt wird.

14. Datenanzeigevorrichtung nach Anspruch 12, wobei
die Datenanzeigevorrichtung so betrieben werden kann, dass die Steuereinheit (6) auf der Anzeigeeinheit (4) statistische Informationen über die Dateidatenfragmente anzeigt.

15. Datenanzeigevorrichtung nach Anspruch 1, wobei
die Datenanzeigevorrichtung so betrieben werden kann, dass die Steuereinheit (6) auf der Anzeigeeinheit (4) ein Bild für ein repräsentatives Dateidatenfragment anzeigt, wodurch das Bild betont wird.

16. Datenanzeigeverfahren, das in einer Datenanzeigevorrichtung eingesetzt wird, die auf einer Anzeigeeinheit (4) eine Gruppe von Bildern anzeigt, die sich auf eine Vielzahl von Dateidatenfragmenten beziehen, und die eine Speichereinheit zum Speichern von Clusterinformationen über Cluster umfasst, die durch Gruppieren der Dateidatenfragmente gemäß jeder aus einer Vielzahl von Gruppierungsbedingungen erzeugt werden, die durch eine Scrollbetätigung ausgewählt werden, um die Anzeige der Gruppe von Bildern umzuschalten, die sich auf die Dateidatenfragmente beziehen, wobei das Datenanzeigeverfahren umfasst:
Empfangen der Scrollbetätigung von einem Benutzer; und
Auswählen einer Gruppierungsbedingung gemäß mindestens einem aus einer Betätigungsdistanz und einer Betätigungsbeschleunigung der Scrollbetätigung, die von der Betätigungseinheit empfangen wird, und Anzeigen, auf der Anzeigeeinheit (4), der Gruppe von Bildern, die sich auf die Vielzahl von Dateidatenfragmenten beziehen, entsprechend den in der Speichereinheit gespeicherten Clusterinformationen für die ausgewählte Gruppierungsbedingung, so dass der Benutzer zwischen Clustern unterscheiden kann, die gemäß der ausgewählten Gruppierungsbedingung erzeugt wurden.

17. Datenanzeigeprogramm für eine Datenanzeigevorrichtung, die auf einer Anzeigeeinheit (4) eine Gruppe von Bildern anzeigt, die sich auf eine Vielzahl von Dateidatenfragmenten beziehen, und die eine Speichereinheit zum Speichern von Clusterinformationen über Cluster umfasst, die durch Gruppieren der Dateidatenfragmente gemäß jeder aus einer Vielzahl von Gruppierungsbedingungen erzeugt werden, die durch eine Scrollbetätigung ausgewählt werden, um die Anzeige der Gruppe von Bildern umzuschalten, die sich auf die Dateidatenfragmente beziehen, wobei das Datenanzeigeprogramm die Datenanzeigevorrichtung zur Durchführung von Folgendem veranlasst:
Empfangen der Scrollbetätigung von einem Benutzer; und
Auswählen einer Gruppierungsbedingung gemäß mindestens einem aus einer Betätigungsdistanz und einer Betätigungsbeschleunigung der Scrollbetätigung, die von der Betätigungseinheit empfangen wird, und Anzeigen, auf der Anzeigeeinheit (4), der Gruppe von Bildern, die sich auf die Vielzahl von Dateidatenfragmenten beziehen, entsprechend den in der Speichereinheit gespeicherten Clusterinformationen für die ausgewählte Gruppierungsbedingung, so dass der Benutzer zwischen Clustern unterscheiden kann, die gemäß der ausgewählten Gruppierungsbedingung erzeugt werden.

18. Aufzeichnungsmedium, auf dem ein Datenanzeigeprogramm für eine Datenanzeigevorrichtung gespeichert ist, die auf einer Anzeigeeinheit (4) eine Gruppe von Bildern anzeigt, die sich auf eine Vielzahl von Dateidatenfragmenten beziehen, und die eine Speichereinheit zum Speichern von Clusterinformationen über Cluster umfasst, die durch Gruppieren der Dateidatenfragmente gemäß jeder aus einer Vielzahl von Gruppierungsbedingungen erzeugt werden, die durch eine Scrollbetätigung ausgewählt werden, um die Anzeige der Gruppe von Bildern umzuschalten, die sich auf die Dateidatenfragmente beziehen, wobei das Datenanzeigeprogramm die Datenanzeigevorrichtung zur Durchführung von Folgendem veranlasst:
Empfangen der Scrollbetätigung von einem Benutzer; und
Auswählen einer Gruppierungsbedingung gemäß mindestens einem aus einer Betätigungsdistanz und einer Betätigungsbeschleunigung der Scrollbetätigung, die von der Betätigungseinheit empfangen wird, und Anzeigen, auf der Anzeigeeinheit (4), der Gruppe von Bildern, die sich auf die Vielzahl von Dateidatenfragmenten beziehen, entsprechend den in der Speichereinheit gespeicherten Clusterinformationen für die ausgewählte Gruppierungsbedingung, so dass der Benutzer zwischen Clustern unterscheiden kann, die gemäß der ausgewählten Gruppierungsbedingung erzeugt wurden.

## Revendications

1. Dispositif d'affichage de données destiné à afficher, sur une unité d'affichage (4), un groupe d'images se rapportant à une pluralité d'éléments de données de fichiers,
**caractérisé par**
une unité fonctionnelle (2) pouvant être mise en oeuvre pour recevoir en provenance d'un utilisateur une opération de défilement destinée à commuter l'affichage du groupe d'images se rapportant aux éléments de données de fichiers,
une unité de stockage (18) mémorisant des informations de grappes concernant des grappes qui sont générées en regroupant les éléments de données de fichiers en fonction de chacune d'une pluralité de conditions de regroupement qui peut être sélectionnée grâce à l'opération de défilement, et
une unité de commande (6) pouvant être mise en oeuvre pour sélectionner une condition de regroupement en fonction d'au moins un critère parmi la distance de fonctionnement et l'accélération de l'opération de défilement reçue par l'unité d'opération, ainsi que pour afficher sur l'unité d'affichage (4) le groupe d'images se rapportant aux éléments de données de fichiers en fonction des informations de grappes mémorisées dans l'unité de stockage pour la condition de regroupement sélectionnée de sorte à ce que l'utilisateur puisse opérer une distinction parmi les grappes générées en fonction de la condition de regroupement sélectionnée.

2. Dispositif d'affichage de données selon la revendication 1, dans lequel
l'unité de commande (6) peut être mise en oeuvre pour afficher par défilement sur l'unité d'affichage (4) le groupe d'images se rapportant aux éléments de données de fichiers tout en commandant la vitesse de défilement pour chaque grappe générée en fonction de la condition de regroupement sélectionnée.

3. Dispositif d'affichage de données selon la revendication 2, dans lequel
l'unité de commande (6) peut être mise en oeuvre pour calculer la vitesse de défilement pour chaque grappe en fonction du nombre d'éléments de données de fichiers dans la grappe et pour afficher par défilement le groupe d'images en fonction de la vitesse de défilement calculée pour chaque grappe.

4. Dispositif d'affichage de données selon la revendication 2, dans lequel
l'unité de commande (6) peut être mise en oeuvre pour choisir une vitesse de défilement variable à l'intérieur d'une grappe et pour afficher par défilement le groupe d'images.

5. Dispositif d'affichage de données selon la revendication 4, dans lequel
l'unité de commande (6) peut être mise en oeuvre pour afficher par défilement le groupe d'images de sorte à ce que la vitesse de défilement pendant au moins l'un parmi le début et la fin d'une période d'affichage de grappe soit plus lente que la vitesse de défilement au milieu de la période d'affichage de la grappe.

6. Dispositif d'affichage de données selon la revendication 1, dans lequel
l'unité de commande (6) peut être mise en oeuvre pour afficher des images se rapportant à des éléments de données de fichiers dans chaque grappe générée en fonction de la condition de regroupement sélectionnée tout en commandant la position d'implantation sur l'unité d'affichage (4) des images dans la grappe.

7. Dispositif d'affichage de données selon la revendication 6, dans lequel
l'unité de commande (6) peut être mise en oeuvre pour afficher les images se rapportant à des éléments de fichiers de sorte à ce que (i) chaque image se rapportant à un élément de données de fichiers dans une grappe chevauche au moins partiellement une autre image dans la grappe et (ii) des images se rapportant à des éléments de données de fichiers dans des grappes différentes ne se chevauchent pas.

8. Dispositif d'affichage de données selon la revendication 1, dans lequel
l'unité de commande (6) peut être mise en oeuvre pour fixer à une couleur identique la couleur de trame d'affichage ou la couleur d'arrière plan d'affichage pour toutes les images se rapportant aux éléments de données de fichiers dans une grappe, et pour fixer à différentes couleurs des couleurs de trames d'affichage ou des couleurs d'arrière plan d'affichage pour des grappes affichées de manière adjacente.

9. Dispositif d'affichage de données selon la revendication 1, où
le dispositif d'affichage de données peut être mis en oeuvre de sorte à ce que l'unité d'affichage (4) affiche une pluralité de groupes d'images se rapportant aux éléments de données de fichiers,
l'unité fonctionnelle (2) reçoit en outre de l'utilisateur une opération de sélection de condition pour chaque groupe,
l'unité de stockage (8) mémorise en outre des informations de grappes concernant des grappes générées en regroupant les éléments de données de fichiers en fonction de chacune d'une pluralité de conditions de regroupement qui peuvent être sélectionnées par l'intermédiaire de l'opération de sélection de condition, et
l'unité de commande (6) affiche le groupe d'images, en fonction d'informations de grappes mémorisées dans l'unité de stockage (8) permettant de regrouper les conditions correspondant aux opérations de sélection de condition, de sorte à ce que l'utilisateur puisse opérer une distinction entre des grappes générées en fonction des conditions de regroupement.

10. Dispositif d'affichage de données selon la revendication 9, où
le dispositif d'affichage de données peut être mis en oeuvre de sorte à ce que l'unité fonctionnelle (2) reçoive simultanément des opérations de défilement pour deux groupes ou plus, et
l'unité de commande (6) affiche simultanément des images dans les deux groupes ou plus pour lesquels les opérations de défilement ont été reçues simultanément.

11. Dispositif d'affichage de données selon la revendication 1, où
le dispositif d'affichage de données peut être mis en oeuvre de sorte à ce que l'unité de stockage (8) mémorise les informations de grappes sur des grappes mises en couches qui sont générées en regroupant hiérarchiquement les éléments de données de fichiers en fonction des conditions de regroupement, et
l'unité de commande (6) affiche le groupe d'images de sorte à ce que l'utilisateur puisse opérer une distinction entre des grappes en couches en fonction de l'opération de défilement et grâce aux informations de grappes mémorisées dans l'unité de stockage.

12. Dispositif d'affichage de données selon la revendication 1, le dispositif d'affichage de pouvant être mis en oeuvre de sorte à ce que
l'unité de commande (6) affiche sur l'unité d'affichage (4) des informations d'attributs pour une grappe qui inclut un élément de données de fichiers affiché.

13. Dispositif d'affichage de données selon la revendication 12, où
le dispositif d'affichage de données peut être mis en oeuvre de sorte à ce que
l'unité de commande (6) affiche sur l'unité d'affichage (4) un emplacement à l'intérieur de la totalité des éléments de données de fichiers pour la grappe qui inclut un élément de données de fichiers affiché.

14. Dispositif d'affichage de données selon la revendication 12, où
le dispositif d'affichage de données peut être mis en oeuvre de sorte à ce que
l'unité de commande (6) affiche sur l'unité d'affichage (4) des informations statistiques sur les éléments de données de fichiers.

15. Dispositif d'affichage de données selon la revendication 1, où
le dispositif d'affichage de données peut être mis en oeuvre de sorte à ce que
l'unité de commande (6) affiche sur l'unité d'affichage (4) une image destinée à un élément représentatif de données de fichiers agrandissant l'image.

16. Procédé d'affichage de données utilisé dans un dispositif d'affichage de données qui affiche sur une unité d'affichage (4) un groupe d'images se rapportant à une pluralité d'éléments de données de fichiers et qui comprend une unité de stockage mémorisant des informations de grappes concernant des grappes qui sont générées en regroupant les éléments de données de fichiers en fonction de chacune d'une pluralité de conditions de regroupement qui peut être sélectionnée par une opération de défilement pour commuter l'affichage du groupe d'images se rapportant aux éléments de données de fichiers, le procédé d'affichage de données comprenant :
la réception d'une opération de défilement en provenance d'un utilisateur, et
la sélection d'une condition de regroupement en fonction d'au moins un critère parmi la distance d'opération et l'accélération de l'opération de défilement reçue par l'unité d'opération ; ainsi que l'affichage sur l'unité d'affichage (4) du groupe d'images se rapportant aux éléments de données de fichiers en fonction des informations de grappes mémorisées dans l'unité de stockage pour la condition de regroupement sélectionnée de sorte à ce que l'utilisateur puisse opérer une distinction entre des grappes générées en fonction de la sélection de regroupement sélectionnée.

17. Programme d'affichage de données destiné à un dispositif d'affichage de données qui affiche sur une unité d'affichage (4) un groupe d'images se rapportant à une pluralité d'éléments de données de fichiers et qui comprend une unité de stockage mémorisant des informations de grappes concernant des grappes qui sont générées en regroupant les éléments de données de fichiers en fonction de chacune d'une pluralité de conditions de regroupement qui peut être sélectionnée par une opération de défilement pour commuter l'affichage du groupe d'images se rapportant aux éléments de données de fichiers, le programme d'affichage de données amenant le dispositif d'affichage de données à effectuer :
la réception d'une opération de défilement en provenance d'un utilisateur, et
la sélection d'une condition de regroupement en fonction d'au moins un critère parmi la distance d'opération et l'accélération de l'opération de défilement reçue par l'unité d'opération ; ainsi que l'affichage sur l'unité d'affichage (4) du groupe d'images se rapportant aux éléments de données de fichiers en fonction des informations de grappes mémorisées dans l'unité de stockage pour la condition de regroupement sélectionnée de sorte à ce que l'utilisateur puisse opérer une distinction entre des grappes générées en fonction de la sélection de regroupement sélectionnée.

18. Support d'enregistrement sur lequel est enregistré un programme d'affichage de données destiné à un dispositif d'affichage de données qui affiche sur une unité d'affichage (4) un groupe d'images se rapportant à une pluralité d'éléments de données de fichiers et qui comprend une unité de stockage mémorisant des informations de grappes concernant des grappes qui sont générées en regroupant les éléments de données de fichiers en fonction de chacune d'une pluralité de conditions de regroupement qui peut être sélectionnée par une opération de défilement pour commuter l'affichage du groupe d'images se rapportant aux éléments de données de fichiers, le programme d'affichage de données amenant de positif d'affichage de données à effectuer :
la réception d'une opération de défilement en provenance d'un utilisateur, et
la sélection d'une condition de regroupement en fonction d'au moins un critère parmi la distance d'opération et l'accélération de l'opération de défilement reçue par l'unité d'opération ; ainsi que l'affichage sur l'unité d'affichage (4) du groupe d'images se rapportant aux éléments de données de fichiers en fonction des informations de grappes mémorisées dans l'unité de stockage pour la condition de regroupement sélectionnée de sorte à ce que l'utilisateur puisse opérer une distinction entre des grappes générées en fonction de la sélection de regroupement sélectionnée.
